# FASCICULE DE BREVET EUROPEEN

(11) **EP 1 161 035 B1**
(45) Date de publication et mention de la délivrance du brevet: **07.03.2007**
(21) Numéro de dépôt: 01401324.7
(22) Date de dépôt: 21.05.2001
(51) Int. Cl.: H04L 12/56

(54) **Procédé de transferts mutuels de paramètres de commande à travers un réseau de communication**
Verfahren zur wechselseitigen Übertragung von Steuerungsparametern durch ein Kommunikationsnetz
Method of mutual transfers of command parameters through a communication network

(30) Priorité: 25.05.2000 FR 0006696
(43) Date de publication de la demande: 05.12.2001
(73) Titulaire: ALCATEL, 75008 Paris (FR)
(72) Inventeur: Henrion, Michel, 92100 Boulogne-Billancourt (FR)
(74) Mandataire: Sciaux, Edmond

(56) Documents cités:
- BOLOT J C ET AL: "DYNAMICAL BEHAVIOR OF RATE-BASED FLOW CONTROL MECHANISMS1" COMPUTER COMMUNICATIONS REVIEW,US,ASSOCIATION FOR COMPUTING MACHINERY. NEW YORK, vol. 20, no. 2, 1 avril 1990 (1990-04-01), pages 35-49, XP000133726 ISSN: 0146-4833
- PEJHAN S ET AL: "REFINEMENTS TO RATE-BASED FLOW CONTROL WITH EXTENSIONS TO MULTIDROP APPLICATIONS" GB,LONDON, CHAPMAN AND HALL, 1 avril 1996 (1996-04-01), pages 147-160, XP000702576 ISBN: 0-412-75970-5
- CHO K -H ET AL: "SUPERVISORY RATE-BASED FLOW CONTROL OF ATM NETWORKS FOR ABR SERVICES" IEICE TRANSACTIONS ON COMMUNICATIONS,JP,INSTITUTE OF ELECTRONICS INFORMATION AND COMM. ENG. TOKYO, vol. E81-B, no. 6, 1 juin 1998 (1998-06-01), pages 1269-1271, XP000788976 ISSN: 0916-8516

## Description

L'invention concerne les systèmes de communication de données, et plus précisément le transfert de paramètres de commande à travers le réseau de communication utilisé pour transférer ces données.

Généralement, un réseau de communication est relié ou connecté à un ensemble de modules terminaux. Les modules terminaux sont reliés ou interconnectés par le réseau, et les données sont transférées à travers le réseau, depuis la partie entrante des modules terminaux qualifiés alors de modules terminaux entrants, vers la partie sortante des modules terminaux qualifiés alors de modules terminaux sortants. Ces qualifications sont utilisées pour faciliter la compréhension lorsque l'on se réfère au sens du transfert des données, étant entendu que les modules terminaux agissent en général à la fois comme modules terminaux entrants pour les données qu'ils transmettent vers le réseau de communication, et comme modules terminaux sortants pour les données qu'ils reçoivent de ce réseau.

A travers ce même réseau de communication les modules terminaux échangent également des paramètres de commande, qui permettent typiquement de superviser ou contrôler le fonctionnement du système de communication, c'est-à-dire celui du réseau et/ou de ses modules terminaux. Ces paramètres de commande sont transférés dans des messages de commande dédiés.

A titre d'exemple, dans un réseau asynchrone, un mécanisme distribué de vérification périodique de cohérence des connexions établies entre modules terminaux implique l'échange de paramètres, dits d'information, caractérisant ces connexions. Dans un tel cas, les paramètres d'information sont transférés dans des messages dits d'information, qui sont transmis par des modules terminaux dits sources et reçus par des modules terminaux dits destinataires. Encore à titre d'exemple, toujours dans un réseau de commutation asynchrone, un mécanisme distribué de contrôle dynamique de flux de trafic inter-module basé sur le débit (en langue anglaise "distributed dynamic inter-module rate-based flow control mechanism") implique deux types d'échanges mutuels de paramètres de commande entre tous les couples de modules terminaux :
- dans le sens aller, le transfert de paramètres, dits d'information, caractérisant une demande d'allocation de largeur de bande pour transmettre des données à travers le réseau, et
- dans le sens retour, le transfert de paramètres associés, dits de réponse, caractérisant un octroi de largeur de bande autorisée.

Dans ce cas, et dans toute la suite de la description, on utilise l'expression "sens aller" pour indiquer un transfert de message d'information depuis un module terminal dit source vers un module terminal dit destinataire, et l'expression "sens retour" pour un transfert de message de réponse associé depuis ce terminal destinataire vers ce terminal source.

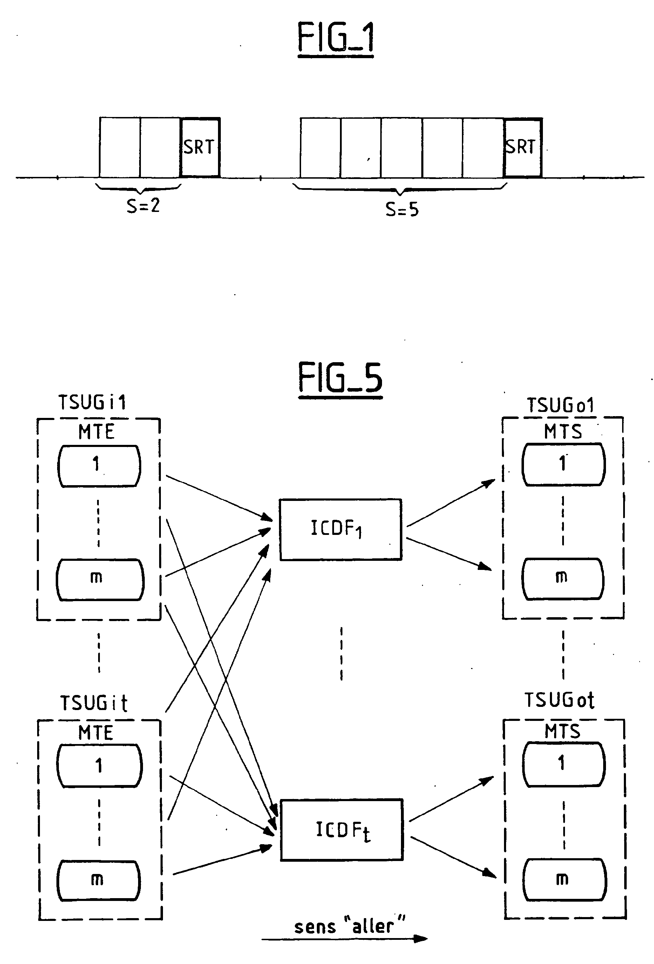

L'invention concerne le transfert mutuel de tels paramètres de commande entre modules terminaux. Dans un réseau de communication asynchrone, les messages de commande dédiés correspondants utilisent des blocs de données (paquets ou cellules) de commande inter-module, qui peuvent être avantageusement de longueur variable, tels que par exemple des cellules à segments multiples. On a représenté en figure 1 des exemples de cellules multi-segments. La première cellule représentée est une cellule à trois segments; le premier marqué SRT sur la figure (acronyme de l'anglais "self routing tag"), est l'en-tête de la cellule quicontient les informations d'acheminement; les deux segments suivants peuvent être utilisés pour placer les paramètres de commande à transmettre. On a aussi représenté sur la figure 1 une autre cellule, qui présente 5 segments disponibles pour placer les paramètres de commande à transmettre. Chaque segment a typiquement une taille de 64 bits. On note S dans la suite le nombre de segments utilisés pour placer les paramètres de commande dans la cellule, de telle sorte que la taille totale d'une cellule pour un message de commande dédié est de 1 + S segments et sa capacité utile est de S fois 64 bits disponibles pour placer les paramètres de commande.

Une première approche classique est basée sur le transfert point-à-point de cellules de commande dédiées, depuis chaque module terminal vers chaque autre module terminal; de tels messages point-à-point ne peuvent alors contenir que le ou les paramètre relatifs à un couple de modules terminaux. Dans la suite, pour simplifier la rédaction, on utilise l'expression 'paramètre de commande' (d'information ou de réponse) au singulier lorsqu'il est relatif à un couple de modules terminaux donné, sachant qu'en pratique il peut s'agir d'un seul paramètre ou bien d'un groupe de paramètres relatif à ce couple.

Une autre approche classique est basée sur le transfert point-à-multipoint de cellules de commande dédiées, depuis chaque module terminal vers chaque ensemble de plusieurs (n) modules terminaux donnés; de tels messages point-à-multipoint peuvent alors contenir les paramètres de commande relatifs à plusieurs (n) couples de modules terminaux. Dans certaines configurations de réseau comportant un grand nombre de modules terminaux, ces solutions classiques peuvent engendrer un trafic relativement important de messages de commande dédiés, qui s'ajoute au trafic utile de données entre modules terminaux et qui peut donc constituer une surcharge de trafic dans le réseau; un des problèmes rencontrés est donc de minimiser l'impact de ce trafic supplémentaire du aux transferts mutuels des paramètres de commande.

L'invention propose une solution à ce problème. Elle permet d'effectuer des transferts mutuels de paramètres de commande à travers le réseau, en réduisant de façon significative, par rapport aux solutions connues de l'art antérieur, le trafic supplémentaire engendré par le transfert de tels paramètres de commande.

Plus précisément, l'invention propose un procédé de transferts mutuels de paramètres de commande entre des modules terminaux interconnectés par un réseau de communication transférant des données depuis des modules terminaux dits sources vers des modules terminaux dits destinataires, des paramètres de commande dits d'information étant transférés depuis des modules terminaux sources vers des modules terminaux destinataires à l'aide de messages d'information dédiés, chaque module terminal source transférant à plusieurs modules terminaux destinataires au moins un paramètre d'information relatif à chacun des modules terminaux destinataires, caractérisé en ce que les transferts mutuels de messages d'information entre modules terminaux s'effectuent par l'intermédiaire de fonctions dites distribuées, en ce qu'une fonction distribuée est affectée à un ensemble de modules terminaux destinataires et à un ensemble de modules terminaux sources; et en ce que le procédé comprend les étapes de
- génération, par un module terminal source, d'au moins un message d'information dédié comprenant des paramètres d'information relatifs aux modules terminaux destinataires de chaque fonction distribuée associée qui est affectée au dit module terminal source;
- transmission de chaque message d'information depuis le dit module terminal source vers ladite fonction distribuée concernée;
- réception par chaque fonction distribuée de messages d'information provenant d'une pluralité de modules terminaux sources auxquels elle est affectée;
- traitement par chaque fonction distribuée des paramètres d'information des messages d'information reçus, ces paramètres étant relatifs aux modules terminaux sources et aux modules terminaux destinataires auxquels elle est affectée;
- génération et transmission par chaque fonction distribuée d'au moins un message d'information comprenant les résultats du traitement des dits paramètres d'information.

Dans un premier mode de réalisation, le traitement effectué par la fonction distribuée comprend la séparation des paramètres d'information, relatifs à une pluralité de modules terminaux destinataires, et provenant d'un même module terminal source, et le regroupement, dans au moins un nouveau message d'information, des paramètres d'information relatifs à un même module terminal destinataire et provenant de différents modules terminaux sources ; le procédé comprend en outre l'étape de réception, par chaque module destinataire, d'au moins un message d'information en provenance de chacune des fonctions distribuées auxquelles il est associé.

Dans un deuxième mode de réalisation, le traitement effectué par la fonction distribuée comprend l'agrégation des paramètres d'information relatifs à un même module terminal destinataire, et provenant d'une pluralité de modules terminaux sources, pour élaborer au moins un paramètre agrégé relatif à chaque module terminal destinataire.

Dans ce cas, il est avantageux que l'étape de génération et transmission, par la fonction distribuée, comprenne la transmission d'au moins un message d'information à chaque module terminal destinataire auquel il est associé; le procédé comprend alors aussi une étape de réception , par chaque module terminal destinataire, d'au moins un message d'information, transportant au moins un paramètre agrégé, en provenance de chacune des fonctions distribuées auxquelles il est associé.

Dans le deuxième mode de réalisation, on peut aussi prévoir que les transferts mutuels de messages d'information entre modules terminaux s'effectuent en outre par l'intermédiaire de fonctions destinataires; une fonction destinataire est alors affectée à un ensemble de modules terminaux destinataires, et à un ensemble de fonctions distribuées; chaque fonction destinataire se substitue au dit ensemble de modules terminaux destinataires en ce qui concerne les opérations de réception finale des messages d'information ; l'étape de génération et transmission par la fonction distribuée comprend dans ce cas la transmission d'au moins un nouveau message d'information à au moins une fonction destinataire, et le procédé comprend en outre une étape de réception par chaque fonction destinataire de messages d'information, transportant au moins un paramètre agrégé, en provenance des fonctions distribuées auxquelles elle est affectée.

On peut encore prévoir, dans le premier mode de réalisation, que le procédé comprend également des transferts mutuels de paramètres de commande dits de réponse dans des messages de réponse dédiés, générés par chacun des modules terminaux destinataires et destinés aux modules terminaux sources, chaque terminal destinataire générant au moins un message de réponse comprenant au moins un paramètre de réponse; les transferts de message de réponse, générés par les modules terminaux destinataires vers les modules terminaux sources, s'effectuent également par l'intermédiaire des fonctions distribuées associées; et le procédé comprend les étapes de
- génération et transmission, par le module terminal destinataire vers chacune des fonctions distribuées associées, d'au moins un message de réponse destiné à plusieurs modules terminaux sources;
- réception, par chacune des fonctions distribuées, de messages de réponse provenant d'une pluralité de modules terminaux destinataires auxquels elle est affectée;
- traitement, par la fonction distribuée, des messages de réponse provenant de différents modules terminaux destinataires;
- génération et transmission, par la fonction distribuée, vers les modules terminaux sources auxquels elle est affectée, d'au moins un nouveau message de réponse regroupant les paramètres de réponse;
- et réception, par chacun desdits modules terminaux sources, des paramètres de réponses relatifs à une pluralité de modules terminaux destinataires, dans les messages de réponse transmis par chaque fonction distribuée associée.

Dans ce cas, il est possible que chaque message de réponse transmis par un module terminal destinataire comprenne, pour chaque module terminal source, au moins un paramètre de réponse individuel par module terminal source; et que l'étape de traitement effectué par la fonction distribuée consiste à séparer, dans chaque message de réponse reçu, les paramètres de réponse individuels destinés à une pluralité de modules terminaux sources, et à regrouper, dans au moins un même nouveau message de réponse, des paramètres de réponse individuels relatifs à un même module terminal source et provenant de différents modules terminaux destinataires.

Toujours dans ce cas, chaque message de réponse transmis par un module terminal destinataire peut comprendre au moins un paramètre de réponse commun identique pour tous les modules terminaux sources; et l'étape de traitement effectué par la fonction distribuée consiste à regrouper, dans au moins un même nouveau message de réponse, des paramètres de réponse communs provenant de différents modules terminaux destinataires.

Dans un autre mode de réalisation, le procédé comprend également des transferts mutuels de paramètres de commande dits de réponse dans des messages de réponse dédiés, générés par chacune desdites fonctions destinataires et destinés aux modules terminaux sources; une fonction destinataire se substitue également aux modules terminaux destinataires dudit ensemble pour effectuer en outre une étape d'élaboration, pour chacun des modules terminaux de cet ensemble, d'au moins un paramètre de réponse commun identique pour tous les modules terminaux sources, une étape de génération d'au moins un message de réponse commun comprenant au moins un paramètre de réponse commun relatif à chacun des modules terminaux destinataires de cet ensemble, et une étape de transmission de ces messages vers les modules terminaux sources.

Dans ce cas, une fonction destinataire transmet au moins un messages de réponse commun directement vers les modules terminaux sources et le procédé comprend en outre une étape de réception, par chacun desdits modules terminaux sources, des paramètres de réponse communs relatifs à une pluralité de modules terminaux destinataires, dans les messages de réponse transmis par chaque fonction destinataire.

Toujours dans ce cas, les transferts de message de réponse depuis les fonctions destinataires vers les modules terminaux sources s'effectuent avantageusement par l'intermédiaire de fonctions distribuées, une fonction destinataire transmettant au moins un message de réponse commun vers les fonctions destinataires auxquelles elle est affectée et le procédé comprend en outre les étapes de
- réception, par chacune des fonctions distribuées associées, d'au moins un message de réponse commun provenant de la fonction destinataire à laquelle elle est affectée;
- traitement, par une fonction distribuée, consistant à redistribuer chaque message de réponse commun vers les modules terminaux sources;
- génération et transmission, par une fonction distribuée, vers les modules terminaux sources auxquels elle est affectée, de chaque message de réponse commun;
- et réception, par chacun desdits modules terminaux sources, des paramètres de réponse communs relatifs à une pluralité de modules terminaux destinataires, dans les messages de réponse transmis par chaque fonction distribuée associée.

On peut encore, pour maintenir la cohérence des paramètres de réponse communs reçus par les modules terminaux sources par rapport aux paramètres d'informations qu'ils ont transmis, en se protégeant contre la perte possible de messages lors de leur transfert à travers le réseau de communication, prévoir que ladite étape de traitement, par une fonction distribuée, des paramètres d'information, comprend également une opération de mise en mémoire, dans la fonction distribuée, d'un indicateur binaire par module terminal source précisant si elle a bien reçu un message d'information de ce module terminal source; dans ce cas, ladite étape de réception des messages d'information dans un module terminal destinataire comprend également une opération de mise en mémoire, dans le module terminal destinataire d'un indicateur binaire par fonction distribuée précisant s'il a bien reçu un message d'information de cette fonction distribuée; ladite étape de génération d'un message de réponse dans un module terminal destinataire comprend également une opération d'incorporation, dans chaque message de réponse, d'un indicateur binaire par fonction distribuée concernée qui précise, sur la base des indicateurs localement mémorisés, si ce module terminal destinataire a bien reçu ou non un message d'information provenant de cette fonction distribuée; et ladite étape de traitement, par une fonction distribuée, des paramètres de réponse, comprend également une opération d'incorporation, dans chaque message de réponse destiné à un module terminal source, d'un indicateur binaire par module terminal destinataire qui précise si chaque paramètre de réponse correspondant à ce module terminal destinataire est validé, cette validation dépendant d'une part des indicateurs binaires reçus par la fonction distribuée dans les messages de réponse et d'autre part des indicateurs binaires mémorisés localement dans la fonction distribuée.

Dans encore un mode de réalisation, pour maintenir la cohérence des paramètres de réponse communs reçus par les modules terminaux sources par rapport aux paramètres d'informations qu'ils ont transmis, en se protégeant contre la perte possible de messages lors de leur transfert à travers le réseau de communication; ladite étape de traitement, par une fonction distribuée, des paramètres d'information, comprend alors également une opération de mise en mémoire, dans la fonction distribuée, d'un indicateur binaire par module terminal source précisant si elle a bien reçu un message d'information de ce module terminal source; ladite étape de réception des messages d'information dans une fonction destinataire comprend également une opération de mise en mémoire, dans la fonction destinataire, d'un indicateur binaire par fonction distribuée précisant si elle a bien reçu un message d'information de cette fonction distribuée; ladite étape de génération d'un message de réponse dans une fonction destinataire comprend également une opération d'incorporation, dans chaque message de réponse, d'un indicateur binaire par fonction distribuée concernée qui précise, sur la base des indicateurs localement mémorisés, si cette fonction destinataire a bien reçu ou non un message d'information provenant de cette fonction distribuée; et ladite étape de traitement, par une fonction distribuée, des paramètres de réponse, comprend également une opération d'incorporation, dans chaque message de réponse destiné à un module terminal source, d'un indicateur binaire par module terminal destinataire qui précise si chaque paramètre de réponse correspondant à ce module terminal destinataire est validé, cette validation dépendant d'une part des indicateurs binaires reçus par la fonction distribuée dans les messages de réponse et d'autre part des indicateurs binaires mémorisés localement dans la fonction distribuée.

Dans un autre mode de réalisation de l'invention, les messages de réponse, qui transportent des paramètres communs identiques pour tous les modules terminaux sources, sont des messages identiques, et leur transfert est de type point-à-multipoint lorsqu'ils sont transmis vers plusieurs destinations.

Il est encore possible que chaque module terminal source transmette dans un message d'information des paramètres d'information, relatifs à chacun des modules terminaux destinataires, chaque paramètre d'information caractérisant le volume de trafic de données qu'un module terminal source désire transmettre à un module terminal destinataire; chaque module terminal destinataire, ou chaque fonction destinataire qui se substitue à ce dernier, transmet alors dans un message de réponse des paramètres de réponse, relatifs à chacun des modules terminaux destinataires, chaque paramètre de réponse permettant à chaque terminal source de déterminer le volume de trafic de données qu'il est autorisé à transmettre à un module terminal destinataire.

De préférence, lesdites fonctions distribuées sont réalisées à l'aide de moyens additionnels introduits dans au moins certains des modules terminaux qui agissent alors également comme fonction distribuée, et chaque module terminal qui génère des messages de commande vers au moins une fonction distribuée, connaît en outre l'identité de chaque module terminal qui assume le rôle de chaque fonction distribuée donnée, permettant ainsi d'adresser ces messages aux fonctions distribuées appropriées.

On peut aussi prévoir que lesdites fonctions destinataires sont réalisées à l'aide de moyens additionnels introduits dans au moins certains des modules terminaux qui agissent alors également comme fonction destinataire ; chaque fonction distribuée qui génère des messages de commande vers au moins une fonction destinataire, connaît en outre l'identité de chaque module terminal qui assume le rôle de chaque fonction destinataire, permettant ainsi d'adresser ces messages aux fonctions destinataires appropriées.

D'autres caractéristiques et avantages de l'invention apparaîtront à la lecture de la description qui suit de modes de réalisation de l'invention, donnés à titre d'exemple et en référence aux dessins annexés, qui montrent
- figure 1, une représentation de cellules à plusieurs segments utilisées dans l'art antérieur;
- figure 2, une représentation schématique repliée d'un système de communication comportant des modules terminaux interconnectés par un réseau de commutation;
- figure 3, une représentation schématique dépliée du système de la Fig. 2, séparant les modules terminaux entrants et sortants;
- figure 4 un exemple de traitement dans une fonction intermédiaire distribuée de traitement de messages selon l'invention;
- figure 5, une représentation schématique d'une configuration des fonctions distribuées de l'invention;
- figure 6, une représentation schématique d'une autre configuration des fonctions distribuées de l'invention;
- figure 7, une représentation schématique d'un exemple de mise en oeuvre de l'invention, utilisant des paramètres de réponse individuels dans le sens retour;
- figure 8, une représentation schématique des transferts de messages par l'intermédiaire des fonctions distribués selon l'invention, utilisant des paramètres de réponse communs dans le sens retour;
- figure 9, une représentation schématique des transferts de messages par l'intermédiaire des fonctions distribués selon l'invention, utilisant des paramètres d'information agrégés dans le sens aller et des paramètres de réponse communs dans le sens retour;
- figure 10, une représentation schématique des transferts de messages par l'intermédiaire des fonctions distribués selon l'invention, utilisant des fonctions destinataires, des paramètres d'information agrégés dans le sens aller, et des paramètres de réponse communs dans le sens retour;
- figure 11, une représentation schématique similaire à celle de la figure 10, mais sans système de masques;
- figure 12, un schéma d'implémentation matérielle d'une fonction distribuée effectuant un traitement consistant à séparer et regrouper les paramètres de commande;
- figure 13, un schéma d'implémentation matérielle d'une fonction distribuée effectuant un traitement consistant à agréger les paramètres de commande.

L'invention concerne les systèmes de communication de données dans lesquels des paramètres de commande sont mutuellement transférés à l'aide de messages de commande dédiés entre les modules terminaux à travers le même réseau de communication que les données. Elle propose, pour réduire la surcharge du trafic supplémentaire engendré par ces messages de commande, et pour cela d'effectuer les transferts mutuels de messages de commande par l'intermédiaire de fonctions distribuées, chacune de ces fonctions étant affectée à un ensemble de modules terminaux sources et un ensemble de modules terminaux destinataires.

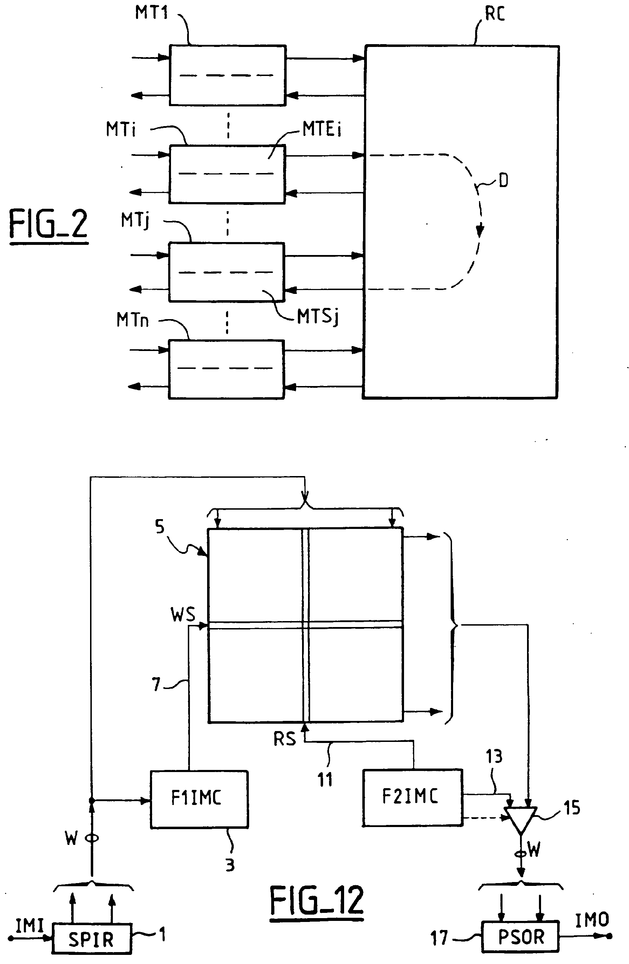

La figure 2 fournit une représentation schématique repliée d'un système de communication comportant N modules terminaux (MT1 à MTn) interconnectés par un réseau de commutation (RC). La configuration interne du réseau RC est quelconque ; ce réseau fournit une accessibilité complète permettant d'interconnecter tous les modules terminaux. Chaque module terminal comprend généralement une partie dite entrante, qui transmet des données au réseau de communication, et une partie dite sortante, qui reçoit des données de ce réseau. Selon une telle représentation repliée de ce réseau, le trait pointillé D illustre le cas d'un transfert de données transmises par la partie entrante d'un module terminal MTi, notée MTEi, et reçues par la partie sortante d'un module terminal MTj, notée MTSj.

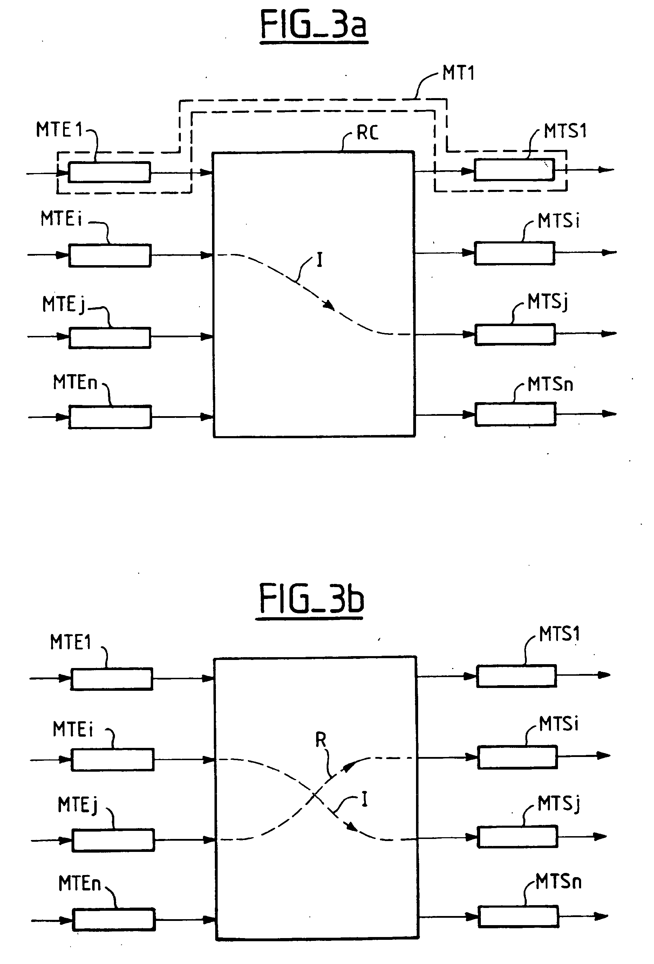

La figure 3 fournit une autre représentation schématique du même système de communication de la Fig. 2, cette fois dépliée, la distinction entre les parties entrantes et sortantes des modules terminaux étant figurée, pour chaque module terminal MT, par une séparation physique en deux modules dits module terminal entrant (MTE) et module terminal sortant (MTS). Il faut comprendre qu'il ne s'agit là que d'une représentation destinée à faciliter la compréhension lorsque l'on se réfère au sens du transfert des données, et que dans la pratique, chaque module terminal peut être bidirectionnel, c'est-à-dire pouvant agir d'une part comme module-terminal entrant et d'autre part comme module terminal sortant.

Dans la figure 3a, le trait pointillé I illustre le simple cas d'un transfert de message de commande, semblable à celui illustré par D dans la figure 2, transmis par un module terminal entrant MTEi (c'est-à-dire la partie entrante du module terminal MTi), et reçu par un module terminal sortant MTSj (c'est-à-dire la partie entrante du module terminal MTj). Un tel message de commande transféré dans le sens aller, appelé message d'information, est transmis par un module terminal dit source (du message d'information), ici la partie entrante de MTi (MTEi), et reçu par un module terminal dit destinataire (du message d'information), ici la partie sortante de MTj (MTSj).

Dans la figure 3b, les deux traits pointillés I et R illustrent le cas d'un double transfert de messages de commande associés entre deux modules terminaux, par exemple MTi et MTj, c'est-à-dire comprenant
- non seulement le même message d'information dans le sens aller figuré par le trait pointillé I, du module terminal dit source, ici la partie entrante de MTi (MTEi), vers le module terminal dit destinataire, ici la partie sortante de MTj (MTSj);
- mais aussi un message dit de réponse dans le sens retour figuré par le trait pointillé R, qui est associé à ce message d'information en ce sens qu'il est inversement transmis par ce module terminal dit destinataire, ici la partie entrante de MTj (MTEj), et reçu par ce module terminal dit source, ici la partie sortante de MTi (MTSi).

Ainsi, dans la suite, on distingue deux aspects différents relatifs aux modules terminaux :
- Concernant le transfert physique à travers le réseau RC, tout transfert de données ou de message de commande est toujours effectué depuis la partie entrante d'un module terminal, appelée module terminal entrant MTE, vers la partie sortante d'un module terminal, appelée module terminal sortant MTS ;
- En outre, concernant les transferts messages de commande, les termes 'source' et 'destinataire' sont relatifs à un message d'information, et donc un message d'information dans le sens aller est transféré depuis un module terminal dit source vers un module terminal dit destinataire, et un message de réponse dans le sens retour est transféré depuis un module terminal destinataire vers un module terminal dit source.

On considère un système de communication pouvant comporter un grand nombre N de modules terminaux, par exemple N = 2048, sachant que la surcharge de trafic, engendrée par le transfert mutuel de messages de commande échangés entre tous ces modules pris deux à deux, augmente de façon quadratique avec le nombre N de modules. En outre, pour évaluer les volumes de trafic de messages de commande, on suppose une fréquence des transferts mutuels de paramètres de commande caractérisée par un cycle périodique Tr.

On utilise alors dans la suite de la description un paramètre représentatif du volume de trafic des messages de commande généré par période temporelle Tr, pour chaque partie d'un module terminal, c'est-à-dire en émission et en réception, respectivement pour les modules terminaux entrants et sortants mentionnés plus haut. Ce volume de trafic par période Tr est noté IMCMD, et il est exprimé en nombre de segments.

La première approche classique mentionnée plus haut suppose le transfert point-à-point de messages de commande ne contenant qu'un paramètre de commande relatif à un seul couple de modules terminaux , puisque dans cette approche chaque module terminal transmet un message distinct vers chaque autre module terminal. Dans ce cas, la valeur du volume de trafic IMCMD est égale au produit du nombre de modules terminaux par la taille du message de commande exprimée en nombre de segments. Par exception, si le paramètre de commande est de taille suffisamment petite pour être inclus dans le segment d'en-tête contenant les informations d'acheminement, la cellule d'un tel message n'a qu'un seul segment, et IMCMD a une valeur égale au nombre de modules terminaux, soit 2048 dans l'exemple ci-dessus. Si la taille du paramètre de commande nécessite de prévoir un second segment dans le message, IMCMD a une valeur double du nombre total de modules terminaux ; ceci suppose que le paramètre de commande a une taille inférieure à segment de cellule, ce qui est généralement le cas.

La seconde approche classique mentionnée plus haut suppose le transfert point-à-multipoint de messages de commande contenant les paramètres de commande relatifs à plusieurs (n) couples de modules dans un même message. Dans ce deuxième cas, la valeur du volume de trafic IMCMD dépend de la taille (P) du paramètre de commande transmis, ainsi que de la taille de la cellule utilisée pour chaque message de commande, laquelle détermine le nombre Q de modules terminaux destinataires concernés dans un même message.

On considère dans la suite l'exemple de cellules présentant des segments de 64 bits, soit 8 octets. Dans ce cas, le volume de trafic par période Tr est : $IMCMD = N . \left(P/8\right) . \left(1+S\right) / S$

S étant comme précédemment le nombre de segments dans une cellule qui sont disponibles pour placer les paramètres, et P la taille du paramètre de commande exprimée en octets, le facteur P/8 étant alors la taille de ce même paramètre exprimée en segments de 8 octets, et la quantité (1 + S)/S exprimant le fait qu'une cellule de 1 + S segments a une capacité utile de S segments disponibles pour placer les paramètres.

Appliquer cette formule à une valeur de P égale à 1 octet et à un nombre N égal à 2048 modules terminaux, conduit aux valeurs suivantes en fonction de S, par exemple :
- IMCMD = 288 segments pour une valeur de S = 8, soit des messages utilisant des cellules de 9 segments,
- IMCMD = 384 segments pour une valeur de S = 2, soit des messages utilisant des cellules de 3 segments.

Le calcul du trafic supplémentaire de messages de commande s'effectue en déterminant le trafic nécessaire pour transférer les paramètres de commande entre tous les couples possibles de modules terminaux sources et destinataires, pour les sens aller et retour, et pour chaque période temporelle Tr. On peut calculer séparément le trafic supplémentaire de commande en émission (noté OVHtm/t dans la suite) ou en réception (noté OVHtm/r dans la suite). Ces valeurs sont exprimées en proportion du débit total DT en émission ou en réception d'un module terminal - par exemple DT = 2,4 Gb/s.

Dans la première approche classique (transferts de messages point-à-point), pour un débit DT de 2,4 Gb/s et des fenêtres de 64 bits, le volume de trafic supplémentaire de commande pour un module terminal en émission (OVHtm/t) représente la proportion suivante du débit total DT : $OVHtm / t = 2. ⁢ IMCMD .64 / 2 , 4. ⁢ {10}^{6} . Tr$ $OVHtm / t = 53 , 3. ⁢ {10}^{- 6} . IMCMD / Tr$
la période Tr étant dans cette formule exprimée en ms. Le facteur 2 tient compte de deux types de transferts, dans le sens aller pour transférer les messages d'information, et dans le sens retour pour transférer les messages de réponse associés. En effet, un module terminal entrant agit en émission, à la fois comme module terminal source en transmettant des messages d'information, et comme module terminal destinataire en transmettant des messages de réponse ; de même, un module terminal sortant agit en réception, à la fois comme module terminal destinataire en recevant des messages d'information, et comme module terminal source en recevant des messages de réponse.

Pour un message de commande utilisant des cellules d'un seul segment (paramètre dans le segment d'en-tête), la valeur du volume de trafic IMCMD est égale à N, et on a $OVHtm / t = 53 , 3. ⁢ {10}^{- 6} . N / Tr$
soit pour l'exemple de N = 2048 modules de terminaison, $OVHtm / t = 0 , 109 / Tr$

C'est-à-dire, pour une période de 1 ms, un volume de trafic supplémentaire de commande représentant 10,9 % du débit total DT.

Pour un message dédié utilisant des cellules de deux segments, on a vu que la valeur du volume de trafic IMCMD est égal au double du nombre N de modules terminaux, soit $OVHtm / t = 107. ⁢ {10}^{- 6} . N / Tr$
soit pour l'exemple de N = 2048 modules de terminaison, $OVHtm / t = 0 , 218 / Tr$

C'est-à-dire, pour une période de 1 ms, un volume de trafic supplémentaire de commande représentant 21,8 % du débit total DT.

Toujours dans l'hypothèse de transferts de messages point-à-point, le volume de trafic supplémentaire pour un module terminal en réception (OVHtm/r) se calcule de la même façon. En fait, le volume de ce trafic a la même valeur que celui du trafic supplémentaire dans le sens émission, puisque chaque module teminal reçoit dans ce cas autant de messages qu'il en émet. $DoncOVHtm / r = OVHtm / t$

Dans la seconde approche classique de transferts de messages point-à-multipoint, avec les mêmes notations et les mêmes hypothèses, le volume du trafic supplémentaire de commande pour chaque module terminal en émission représente la proportion suivante du débit total DT : $OVHtm / t = 2. ⁢ IMCMD .64 / 2 , 4. ⁢ {10}^{6} . Tr$
ce qui, en remplaçant IMCMD par la valeur calculée plus haut, conduit à $OVHtm / t = 6 , 67. ⁢ N . P . \left(1+S\right) / \left(S.{10}^{6}.Tr\right)$

Dans l'hypothèse d'une valeur de P d'un octet, de N = 2048 modules, et de Tr = 1 ms, le volume du trafic supplémentaire de commande en émission représente la proportion suivante du débit total DT : $\begin{matrix}pour S = 2 , & OVHtm / t = 2 , 05 % ,\end{matrix}$ $\begin{matrix}pour S = 4 , & OVHtm / t = 1 , 71 % ;\end{matrix}$ $\begin{matrix}pour S = 8 , & OVHtm / t = 1 , 54 % .\end{matrix}$

Le calcul du volume de trafic supplémentaire en réception (OVHtm/r) s'effectue en considérant qu'un message de commande dédié reçu par un module terminal ne contient en fait qu'un seul paramètre de commande, qui le concerne, les autres paramètres du message étant relatifs à d'autres modules.

Avec les hypothèses précédentes, chaque message reçu contient S.8/P paramètres de commande, mais un seul de ces paramètres concerne le module terminal destinataire. Dans cette deuxième approche, le volume du trafic supplémentaire en réception est donc égal à celui du trafic supplémentaire en émission, multiplié par un facteur S.8/P, soit $OVHtm / r = \left(S.8/P\right) . OVHtm / t$
ce qui à partir de l'équation (4) ci-dessus donne : $OVHtm / r = 53 , 3. ⁢ {10}^{- 6} . N . \left(1+S\right) / Tr$

Dans l'hypothèse d'une valeur de P d'un octet, de N = 2048 modules, et de Tr = 1 ms, le trafic supplémentaire de commande en réception représente la proportion suivante du débit total DT : $\begin{matrix}pour S = 2 , & OVHtm / r = 32 , 8 % ;\end{matrix}$ $\begin{matrix}pour S = 4 , & OVHtm / r = 54 , 6 % ;\end{matrix}$ $\begin{matrix}pour S = 8 , & OVHtm / r = 98 , 3 % .\end{matrix}$

Par rapport à la première approche, utilisant des transferts de messages de commande point-à-point, cette seconde approche, utilisant des transferts de messages de commande point-à-multipoint, permet ainsi une réduction significative du trafic supplémentaire de commande en émission; mais elle conduit par ailleurs à une augmentation significative, éventuellement excessive, du trafic supplémentaire en réception. L'invention permet de conserver les avantages de la seconde approche de l'art antérieur, en ce qui concerne le trafic supplémentaire en émission engendré par le transfert des messages de commande, en générant des messages contenant des paramètres de commande concernant plusieurs autres modules terminaux. Elle permet aussi de réduire de façon, significative le trafic supplémentaire en réception par rapport à cette seconde approche. Pour cela, l'invention propose que les transferts mutuels de messages de commande entre les modules terminaux s'effectuent par l'intermédiaire de fonctions intermédiaires distribuées de traitement de messages, appelées dans la suite plus simplement fonctions distribuées. Ces fonctions sont dites intermédiaires, en ce sens qu'elles effectuent un traitement intermédiaire des paramètres de commande dans les messages transférés mutuellement entre les modules terminaux sources et destinataires.

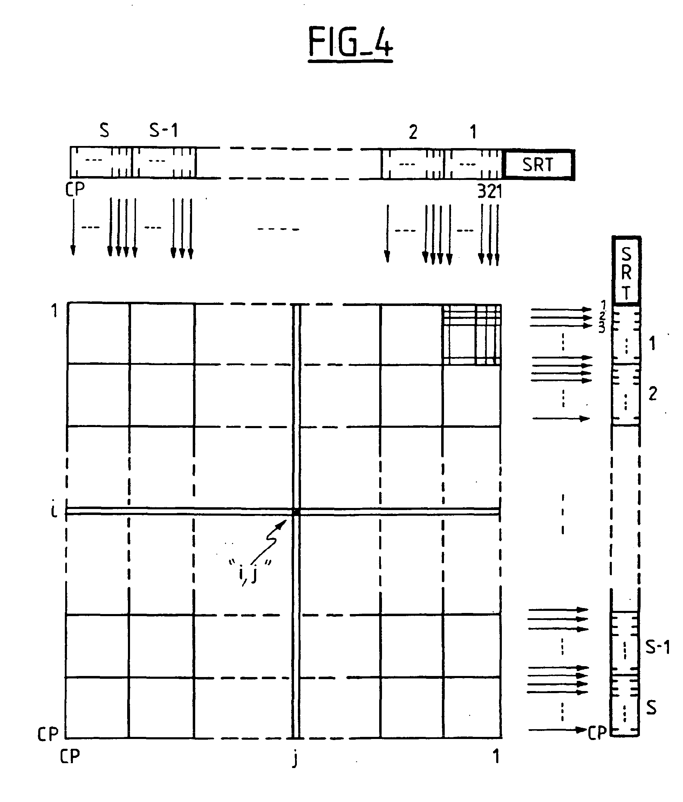

Ces fonctions sont aussi dites distribuées, en ce sens que chacune d'elle est affectée à un ensemble de modules terminaux sources donné et à un ensemble de modules terminaux destinataires donné, ces ensembles pouvant être des sous-ensembles du nombre total N de modules terminaux. Enfin, elles effectuent un traitement des paramètres transférés dans les messages de commande, comme expliqué dans l'exemple de la figure 4 et dans les exemples des figures suivantes.

Considérons dans un premier temps le cas des transferts mutuels des paramètres d'information dans le sens aller dans des messages d'information traités par ces fonctions intermédiaires. Chaque module terminal source génère, pour chaque fonction distribuée qui lui est affectée, au moins un message d'information dédié comprenant des paramètres d'information relatifs aux modules terminaux destinataires qui sont affectés à cette fonction distribuée. Les messages générés sont ensuite transmis par le module terminal source aux fonctions distribuées respectives.

Une fonction distribuée reçoit des messages d'information provenant des modules terminaux sources auxquels elle est affectée; elle traite les paramètres d'information contenus dans les messages d'information reçus, ces paramètres étant relatifs aux modules terminaux destinataires auxquels elle est affectée. Elle génère ensuite au moins un message d'information contenant au moins un paramètre d'information résultant du traitement effectué sur les paramètres d'information reçus, et transmet ensuite ce message.

Alors qu'un module terminal source émet un message d'information regroupant des paramètres d'information relatifs à plusieurs modules terminaux destinataires, le traitement intermédiaire effectué par les fonctions distribuées permet de réduire le trafic supplémentaire en réception pour les modules terminaux destinataires; cette réduction de trafic dépend de la nature du traitement effectué par les fonctions distribuées. La suite de la description donne des exemples de traitement, et notamment en référence à la figure 4 qui donne un exemple de séparation et regroupement des paramètres d'information.

Les fonctions de l'invention sont dans la suite décrites, indépendamment de leur localisation physique dans le réseau de communication, à savoir sous forme de modules serveurs intermédiaires connectés au réseau et dédiés par fonction distribuée, ou bien sous forme de moyens additionnels ajoutés à certains modules terminaux qui agissent alors également comme fonction distribuée. Des modes de réalisation possibles, mais non limitatifs sont décrits plus bas.

La figure 4 montre un exemple de traitement effectué dans une fonction intermédiaire distribuée de traitement de messages selon l'invention. Dans l'exemple de la figure, le traitement effectué par la fonction distribuée comprend la séparation des paramètres d'information relatifs à une pluralité de modules terminaux destinataires et provenant d'un même module terminal source, et le regroupement, dans au moins un message d'information d'un type différent, des paramètres d'information relatifs à un même module terminal destinataire et provenant de différents modules terminaux sources. Ainsi, au niveau des modules terminaux sources, le groupement, dans les messages de commande destinés aux fonctions distribuées, de plusieurs paramètres d'information permet de conserver les avantages de la seconde approche classique mentionnée plus haut; en outre, au niveau des fonctions distribuées, le regroupement, dans un même message d'information, des paramètres relatifs à un module terminal destinataire donné permet d'éviter l'augmentation significative du trafic supplémentaire de commande en réception mise en évidence plus haut dans l'analyse de la seconde approche classique.

Est représenté dans la partie supérieure de la figure 4 un message d'information dédié transmis par un module terminal source vers une fonction distribuée qui lui est affectée. Le message présente la structure déjà décrite en référence à la figure 1, avec un segment d'en-tête marquée SRT et S segments contenant des paramètres d'information. Les divers paramètres d'information contenus dans un tel message transmis par un module terminal source vers une fonction distribuée sont relatifs à des modules terminaux destinataires auxquels la fonction distribuée est affectée. La Fig. 4 illustre le cas où tous les paramètres concernant l'ensemble de ces modules terminaux destinataires sont contenus dans une seule cellule de message d'information transmise par chaque module terminal source. Le même principe est généralisable au cas où chaque module terminal source transmet tous ces paramètres dans plusieurs cellules de message d'information, chacune de ces cellules contenant une fraction de tous les paramètres relatifs à l'ensemble de ces modules terminaux destinataires auxquels la fonction distribuée est affectée.

Une fonction distribuée reçoit, de la part des différents modules terminaux sources auxquels elle est affectée, des messages d'information, contenant chacun des paramètres d'information provenant du module terminal source ayant transmis le message, chacun de ces paramètres étant relatif à l'un des modules terminaux destinataires auxquels la fonction distribuée est affectée. L'ensemble des paramètres des messages reçus par la fonction distribuée transite par un dispositif de mémorisation temporaire représentée par le carré situé dans la partie inférieure gauche de la figure 4. Dans ce carré, "i, j" représente l'ordre ou l'indice i du module terminal source, et l'indice j du module terminal destinataire, auxquels un paramètre d'information est relatif. Ce dispositif de mémorisation a autant de lignes que de colonnes dans l'exemple illustré où le cardinal de l'ensemble des modules terminaux source auxquels la fonction distribuée est affectée est choisi égal au cardinal de l'ensemble des modules terminaux destinataire auxquels la fonction distribuée est affectée. Il peut bien sûr en être autrement, et dans ce cas le carré de la figure 4 serait un rectangle, sans que le traitement ne diffère par ailleurs.

La fonction distribuée sépare les différents paramètres d'information provenant d'un module terminal source; elle regroupe les paramètres d'information relatifs à un même module terminal destinataire et provenant de différents modules terminaux sources. Pour effectuer ce traitement, dans un premier temps, la fonction distribuée inscrit d'abord, dans chaque ligne i du dispositif de mémorisation, l'ensemble des paramètres du message d'information reçu de chaque module terminal source i ; puis, dans un deuxième temps, elle lit chaque colonne j du dispositif de mémorisation, qui contient l'ensemble des paramètres du nouveau message d'information destiné à chaque module terminal destinataire j, ces paramètres étant alors regroupés dans un nouveau message d'information représenté verticalement sur la partie droite de la figure. Dans l'exemple, après lecture de la colonne j dans le dispositif de mémorisation, le message transmis par la fonction distribuée est destiné au module terminal destinataire d'indice j; il peut encore présenter la structure décrite en référence à la figure 1, avec un segment d'en-tête et S segments pour contenir des contenant les paramètres d'information regroupés. Le nouveau message d'information transmis par la fonction distribuée, dans l'exemple de la figure, comprend les paramètres relatifs au module terminal j, et provenant des différents modules terminaux sources auxquels est affectée la fonction distribuée.

Ensuite, la fonction distribuée transmet les nouveaux messages résultant du traitement effectué vers les modules terminaux destinataires respectifs auxquels elle est affectée. On comprend de la sorte que, dans le sens aller, chaque module terminal destinataire reçoit de la part de la ou les fonctions distribuées qui lui sont affectées des nouveaux messages d'information dédiés, contenant uniquement (ou essentiellement) des paramètres d'information qui lui sont destinés. On évite ainsi l'augmentation significative du trafic supplémentaire de commande en réception OVHtm/r mise en évidence par la formule (5).

Le processus de traitement des messages de commande illustré dans l'exemple de la figure 4 a été décrit pour le cas des transferts mutuels dans le sens aller des paramètres d'information dans des messages générés par les modules terminaux sources, et regroupés par les fonctions distribuées dans des nouveaux messages d'information destinés aux modules terminaux destinataires.

On conçoit aisément qu'un même processus symétrique peut être aussi effectué par de telles fonctions intermédiaires distribuées pour le cas des transferts mutuels dans le sens retour des paramètres de réponse dans des messages générés par les modules terminaux destinataires, et regroupés par les fonctions distribuées dans des nouveaux messages de réponse destinés aux modules terminaux sources.

Dans le cas d'un traitement effectué par une fonction distribué de la figure 4, le calcul des volumes de trafic de commande est simple: par exemple, dans l'hypothèse où les nouveaux messages de commande transmis par une fonction distribuée sont de même taille que les messages qu'elle reçoit des modules terminaux, et si les cardinaux des ensembles de modules terminaux sources et destinataires auxquels est affectée une fonction distribuée sont égaux, les volumes de trafic de commande traités au niveau d'une fonction distribuée en émission (OVHicdf/t) et en réception (OVHicdf/r) sont égaux, et ces volumes de trafics sont aussi égaux aux volumes de trafic supplémentaire de commande au niveau d'un module terminal en émission (OVHtm/t) et en réception (OVHtm/r) qui sont aussi égaux. On retrouve donc les valeurs proposées plus haut, c'est-à-dire dans l'hypothèse d'une valeur de P d'un octet, de N = 2048 modules terminaux, et de Tr = 1 ms, ces volumes de trafic de commande représentent la proportion suivante du débit total DT : $\begin{matrix}pour S = 2 , & OVHtm / t = OVHtm / r = OVHicdf / t = OVHicdf / r = 2 , 05 % ;\end{matrix}$ $\begin{matrix}pour S = 4 , & OVHtm / t = OVHtm / r = OVHicdf / t = OVHicdf / r = 1 , 71 % ;\end{matrix}$ $\begin{matrix}pour S = 8 , & OVHtm / t = OVHtm / r = OVHicdf / t = OVHicdf / r = 1 , 54 % .\end{matrix}$

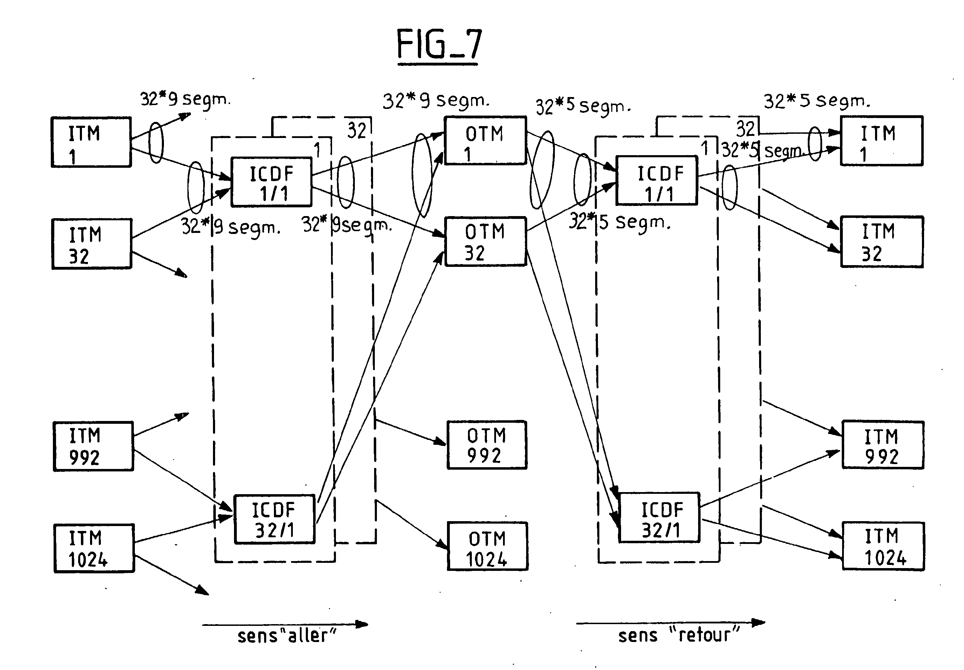

Un exemple de transfert de messages utilisant un traitement du genre de celui de la figure 4 est donné en référence à la figure 7.

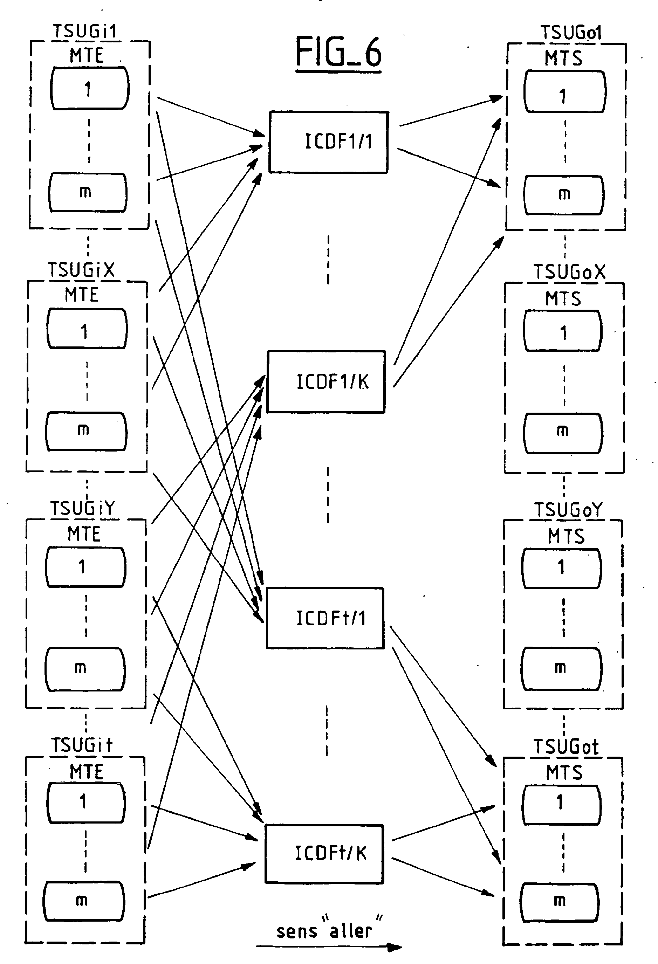

Les figures 5 et 6 donnent des exemples possibles du choix de la modularité et de l'affectation des fonctions distribuées. La figure 5 montre une représentation schématique d'une configuration dans le sens aller des fonctions distribuées de l'invention. Les modules terminaux MT sont regroupés en groupes dits groupes TSUG (acronyme de l'anglais " Terminal Switching Unit Group "). Ces groupes sont au nombre de t, et sont notés TSUG1 à TSUG t, chaque groupe comprenant m modules terminaux ; le nombre total de modules terminaux N est donc égal au produit de t par m. La figure 5 est une représentation dépliée, du même type que celle de la figure 3, qui sépare les modules terminaux entants MTE, et les modules terminaux sortants MTS, respectivement regroupés en groupes dits groupes entrants de modules terminaux entants (TSUG i1 à TSUG it) et groupes sortants de modules terminaux sortants (TSUGo1 à TSUGot). Dans l'exemple de la figure 5, on a considéré par exemple autant de fonctions distribuées (ICDF1 à ICDFt) qu'il y a de groupes de modules terminaux destinataires. Dans un tel cas, chaque fonction distribuée est donc affectée aux MTS d'un groupe sortant, et elle est affectée à tous les modules terminaux sources, donc à tous les MTE. De la sorte, dans le sens aller, chaque MTE est un module terminal source qui transmet à chaque fonction distribuée au moins un message d'information dans lequel ou dans lesquels sont regroupés des paramètres d'information relatifs à des MTS qui sont des modules terminaux destinataires du groupe sortant auquel la fonction est affectée. Une fonction distribuée reçoit ces messages de la part de tous les modules terminaux sources. Elle sépare les paramètres et les regroupe comme expliqué en référence à la figure 4, et retransmet vers chacun des modules terminaux destinataires auxquels elle est affectée, des nouveaux messages d'information. Chaque nouveau message peut comprendre des paramètres d'information provenant de divers modules terminaux sources et relatifs au seul module terminal destinataire auquel le message est destiné.

On peut noter qu'il est aussi possible de prévoir une configuration inverse de celle de la figure 5, dans laquelle les fonctions distribuées recevraient des messages d'information d'un groupe de modules terminaux sources, et transmettraient des nouveaux messages vers tous les modules terminaux destinataires.

Une configuration de fonctions distribuées comme celle de la figure 5, ou bien son inverse, peut être également utilisée pour transférer les messages de réponse dans le sens retour. Cependant, dans un cas comme dans l'autre, le trafic de messages de commande traité par une fonction intermédiaire peut devenir trop important dans certaines configurations de grande capacité.

Pour pallier cet inconvénient, la figure 6 montre une représentation schématique d'une autre configuration dans le sens aller des fonctions distribuées de l'invention, selon laquelle on prévoit en outre une répartition des fonctions distribuées sur la base d'un certain nombre de groupes entrants TSUGi de MTE qui sont des modules terminaux sources dans le sens aller. On utilise sur la figure 6 les notations suivantes :
- m: le nombre de modules terminaux dans un groupe TSUG
- t: le nombre total de groupes TSUG de modules terminaux sources (et destinataires)
- K: un sous multiple de t, fractionnant les t groupes entrants TSUGi en K ensembles de X (= t/K) groupes entrants TSUGi
$Y = t - X + 1$

Les K fonctions distribuées ICDFj/l à ICDFj/K sont affectées au groupe sortant d'ordre j de modules terminaux destinataires (TSUGoj), et chacune de ces K fonctions distribuées ICDFj/z (1 <= z < = K) est affectée à un ensemble de X groupes entrants d'ordre z de modules terminaux sources (par exemple, TSUGiY à TSUGit, pour z = K). Sur la figure sont seulement représentées les deux ensembles de fonctions distribuées ICDF1/1 à ICDF1/K et ICDFt/1 à ICDFt/K, affectées respectivement aux groupes de modules terminaux destinataires TSUG1 et TSUGt. Cette configuration permet de réduire le nombre de messages qu'une fonction distribuée reçoit, en évitant qu'une fonction distribuée ne doive recevoir des messages provenant de l'ensemble des modules terminaux sources.

Comme dans le cas de la figure 5, on pourrait alternativement prévoir une configuration inverse : une fonction distribuée recevrait alors les messages d'information d'un groupe entrant de modules terminaux sources, et transmettrait des nouveaux messages vers X groupes sortants de modules terminaux destinataires.

Une configuration de fonctions distribuées comme celle de la figure 6, ou bien son inverse, peut être également utilisée pour transférer les messages de réponse dans le sens retour.

Plus généralement, on peut faire varier le cardinal des ensembles de modules terminaux sources et destinataires auxquels est affectée une fonction distribuée, au-delà des exemples des figures 5 et 6. On peut donc affecter une fonction distribuée à des ensembles de cardinaux différents, ou à des ensembles de même cardinal. On a dans les exemples des figures 5 et 6 suivi une séparation des modules terminaux sources et destinataires par groupes TSUG. D'autres types de séparation - à l'intérieur des groupes TSUG - peuvent aussi bien être mis en oeuvre.

D'autres exemples de modularité de fonctions distribuées peuvent être déduits des figures 7 à 11 qui suivent. Dans le cas des figures 7 à 9, chaque fonction distribuée est affectée à m.X = 32 modules terminaux sources et à m = 32 modules terminaux destinataires (exemple où X = 1). Ainsi, dans le sens aller, chaque module terminal source envoie des messages d'information vers t = 32 fonctions distribuées, et chaque module terminal destinataire reçoit des nouveaux messages d'information de K = 32 fonctions distribuées.

Le calcul des volumes de trafic de commande est le suivant, dans une configuration de fonctions distribuées du genre de celle de la figure 6, et pour un traitement du genre de celui de la figure 4. On suppose dans la suite que les messages reçus et transmis par une fonction distribuée ont la même taille de 1 + S segments. Au niveau des modules terminaux, grâce au traitement de réarrangement de paramètres effectué par les fonctions distribuées, comme dans le cas de la figure 5, le volume de trafic supplémentaire en réception OVHtm/r est égal à celui du trafic supplémentaire en émission OVHtm/t, chacun ayant la même valeur que celui du trafic supplémentaire dans le sens émission OVHtm/t calculé dans le cas de la seconde approche classique mentionnée plus haut. Donc, dans l'hypothèse d'une valeur de P d'un octet, de N = 2048 modules, et de Tr = 1 ms, le volume du trafic supplémentaire au niveau d'un module terminal, en émission comme en réception, OVHtm, représente la proportion suivante du débit total DT : $\begin{matrix}pour S = 2 , & OVHtm = 2 , 05 % ;\end{matrix}$ $\begin{matrix}pour S = 4 , & OVHtm = 1 , 71 % ;\end{matrix}$ $\begin{matrix}pour S = 8 , & OVHtm = 1 , 54 % .\end{matrix}$

Le calcul de trafic au niveau de chacune des fonctions distribuées est le suivant. Chaque fonction distribuée transmet autant de paramètres d'information qu'elle en reçoit; ainsi pour chaque fonction distribuée, dans l'hypothèse où les messages reçus et transmis par une fonction distribuée sont de même taille, le volume de trafic de commande en émission est égal à celui du trafic de commande en réception; cette valeur est notée dans la suite OVHicdf. On a en outre $OVHicdf = OVHtm . m / K$
m étant le nombre de modules terminaux par groupe TSUG et K le nombre de fonctions distribuées affectées à un même groupe sortant TSUGo de modules terminaux destinataires. En considérant par exemple le trafic de commande en émission de la fonction ICDF1/1 de la figure 6, cette relation est représentative du fait que, ce trafic est la somme du trafic de messages d'information et de réponse, c'est-à-dire comprenant respectivement:
- dans le sens aller, tous les messages d'information transmis aux m modules terminaux du groupe sortant TSUGo auquel elle est affectée, ce volume de trafic étant égal au trafic de messages d'information reçus par un module terminal destinataire (soit OVHtm/2), multiplié par le nombre (m) de modules terminaux destinataires de ce groupe TSUGo, et divisé par le nombre (K) de fonctions distribuées affectées aux modules terminaux destinataires de ce même groupe TSUGo, soit un trafic égal à OVHTtm.m/2.K;
- dans le sens retour, tous les messages de réponse transmis aux m.X modules terminaux sources auxquels elle est affectée, ce volume de trafic étant égal au trafic de messages de réponse reçus par un module terminal source (soit OVHtm/2), multiplié par le nombre (m.X) de modules terminaux sources auxquels elle est affectée, et divisée le nombre (t) de fonctions distribuées affectées à ce même ensemble de m.X modules terminaux sources, soit un trafic encore égal à OVHTtm.m/2.K, la somme de ces deux volumes de trafic étant bien égale à OVHTtm.m/K.

On a alors $OVHicdf = 2. ⁢ IMCMD .64. m / K .2 , 4. ⁢ {10}^{6} . Tr$
et en remplaçant dans cette formule IMCMD par sa valeur calculée plus haut, on obtient : $OVHicdf = 2. ⁢ N . m . \left(P/8\right) . \left(1+S\right) .64 / K . S .2 , 4. ⁢ {10}^{6} . Tr$ $OVHicdf = 6 , 67. ⁢ {10}^{- 6} . N . m . P . \left(1+S\right) / K . S . Tr$

En reprenant l'hypothèse de valeur pour P de 1 octet, on obtient le volume de trafic de commande au niveau d'une fonction distribuée OVHicdf, en émission comme en réception, représente la proportion suivante du débit total DT, en fonction de la valeur de S caractérisant la taille utilisée pour les messages de commande: $\begin{matrix}pour S = 2 , & OVHicdf = 10 , 00. ⁢ {10}^{- 6} . N . m . / K . Tr\end{matrix}$ $\begin{matrix}pour S = 4 , & OVHicdf = 8 , 33. ⁢ {10}^{- 6} . N . m . / K . Tr\end{matrix}$ $\begin{matrix}pour S = 8 , & OVHicdf = 7 , 50. ⁢ {10}^{- 6} . N . m . / K . Tr\end{matrix}$
Ceci donne, pour des valeurs de N de 2048, et de m de 64:
Pour S = 2, OVHicdf = 1,31/K.Tr, soit pour Tr = 1 mus : $pour K = 32 , OVHicdf = 4 , 10 % ;$ $pour K = 16 , OVHicdf = 8 , 19 % ;$ $pour K = 8 , OVHicdf = 16 , 4 % ;$ $pour K = 4 , OVHicdf = 32 , 8 % ;$ $pour K = 2 , OVHicdf = 65 , 5 % ;$ $pour K = 1 , OVHicdf = 131 % .$
Pour S = 4, OVHicdf = 1,09/K.Tr, soit pour Tr = 1 ms : $pour K = 32 , OVHicdf = 3 , 41 % ;$ $pour K = 16 , OVHicdf = 6 , 83 % ;$ $pour K = 8 , OVHicdf = 13 , 7 % ;$ $pour K = 4 , OVHicdf = 27 , 3 % ;$ $pour K = 2 , OVHicdf = 54 , 6 % ;$ $pour K = 1 , OVHicdf = 109 % .$
Pour S = 8, OVHicdf = 9,83/K.Tr, soit pour Tr = 1 ms : $pour K = 32 , OVHicdf = 3 , 07 % ;$ $pour K = 16 , OVHicdf = 6 , 14 % ;$ $pour K = 8 , OVHicdf = 12 , 3 % ;$ $pour K = 4 , OVHicdf = 24 , 6 % ;$ $pour K = 2 , OVHicdf = 49 , 2 % ;$ $pour K = 1 , OVHicdf = 98 , 3 % .$

Ces calculs montrent que les volumes de trafic au niveau des fonctions distribuées peut rester faible, si le nombre K est suffisamment élevé. En outre on peut noter que les valeurs pour K = 1 sont les valeurs obtenues dans la configuration plus simple de la figure 5. L'invention permet ainsi de maintenir le volume du trafic supplémentaire engendré par les transferts mutuels de messages de commande à des niveaux faibles au niveau des modules terminaux. En outre le choix approprié de la modularité et de l'affectation des fonctions distribuées par ensemble de modules terminaux qui leur sont affectés, permet aussi de maintenir à des niveaux acceptables le volume du trafic de messages de commande traités au niveau de chaque fonction distribuée.

On donne en référence aux figures 7 à 11 des exemples de mise en oeuvre de l'invention, dans différentes configurations, et pour divers types de traitement effectués par les fonctions distribuées. On considère dans la suite des exemples le cas d'un réseau de commutation ayant une capacité de 1024 modules terminaux, qui agissent à la fois comme modules terminaux sources et destinataires. Ces figures montrent différentes configurations de fonctions distribuées utilisées pour les deux types de transferts mutuels de messages de commande, des messages d'information (dans le sens aller) et des messages de réponse (dans le sens retour). Selon une représentation "dépliée", les mêmes modules terminaux sources ITM sont représentés deux fois, pour plus de clarté, à gauche en tant que MTE lorsqu'ils transmettent des messages d'information et à droite en tant que MTS lorsqu'ils reçoivent des messages de réponse. Au centre des figures 7 à 9, chaque module terminal destinataire OTM agit en tant que MTS pour les messages d'information qu'il reçoit des fonctions distribuées, et en tant que MTE pour les messages de réponse qu'il transmet aux fonctions distribuées.

La figure 7 montre une représentation schématique d'un exemple de mise en oeuvre de l'invention, pour transférer, dans le sens aller et dans le sens retour, des paramètres de commande individuels par module terminal. Il peut s'agir par exemple dans le sens aller d'un paramètre d'information caractérisant une demande d'allocation de largeur de bande pour transmettre des données à travers le réseau, transmise par chaque module terminal source vers chaque module terminal destinataire. Dans le sens retour, il peut s'agir par exemple d'un paramètre de réponse caractérisant un octroi de largeur de bande autorisée, qui est déterminé, par chacun des modules terminaux destinataires et pour chacun des modules terminaux sources, en fonction de sa largeur de bande totale actuellement disponible et des diverses demandes d'allocation de largeur de bande reçues de l'ensemble des modules terminaux sources.

Le traitement effectué par les fonctions distribuées dans le cas de la figure 7 est du genre de celui de la figure 4 - séparation et regroupement des paramètres d'information dans le sens aller et des paramètres de réponse dans le sens retour. Les modules terminaux sources ITM sont regroupés dans des groupes TSUG d'un cardinal de 32. On prévoit une fonction distribuée par groupe de 32 modules terminaux sources, et par groupe de 32 modules terminaux destinataires. Autrement dit, comme le montre la figure, on prévoit 32 groupes de 32 fonctions distribuées pour la capacité maximale du commutateur (N = 1024 modules terminaux). Le premier groupe, qui comprend les fonctions distribuées référencées ICDF1/1 à ICDF32/1 sur la figure 7, reçoit, dans le sens aller, les messages contenant les paramètres d'information relatifs aux 32 premiers modules terminaux destinataires référencés OTM1 à OTM32, de la part de tous les modules terminaux sources ITM1 à ITM1024, la première fonction distribuée ICDF1/1 de ce groupe étant affectée aux modules terminaux sources ITM1 à ITM32. De façon générale, dans le sens aller, une fonction distribué ICDFi/j reçoit des messages d'information des modules terminaux sources ITM(32.i - 31) à ITM(32.i), et transmet des nouveaux messages d'information vers les modules terminaux destinataires OTM(32.j-31) à OTM(32j). Dans le sens retour, une fonction distribué ICDFi/j reçoit des messages de réponse des modules terminaux destinataires OTM(32.i - 31) à OTM(32.i), et transmet des nouveaux messages d'information vers les modules terminaux destinataires ITM(32.j-31) à ITM(32j)

On a en outre porté sur la figure les tailles possibles des messages. On a considéré l'hypothèse de messages de 9 segments, soit une valeur de 8 pour S. Chaque paramètre d'information a une taille de deux octets, et chaque segment a une taille de 64 octets. Un message d'information peut donc contenir les paramètres d'information relatifs à 32 modules terminaux. Chaque module terminal source ITMi génère donc 32 messages d'information de 9 segments chacun, vers les 32 fonctions ICDFi/j qui lui sont affectées, j variant de 1 à 32. Chaque message d'information contient les paramètres relatifs aux modules terminaux destinataires OTM(32.j-31) à OTM(32j) affectés à la fonction distribuée d'ordre j à laquelle le message d'information est adressé.

Ainsi, comme indiqué sur la figure, chaque fonction distribuée ICDFi/j reçoit, des 32 modules terminaux sources ITM(32.i - 31) à ITM(32.i) auxquels elle est affectée, 32 messages d'information de 9 segments chacun. La fonction distribuée sépare les paramètres d'information des messages reçus, et regroupe, dans des nouveaux messages, les paramètres d'information relatifs à chaque module terminal destinataire donné, comme expliqué en référence à la figure 4. Pour ce faire, après avoir reçu, de ces 32 modules terminaux sources, l'ensemble des paramètres d'information destinés aux modules terminaux destinataires auxquels elle est affectée, la fonction distribuée ICDFi/j regroupe les 32 paramètres d'information relatifs au module terminal destinataire OTM(1+32(j-1)) dans un seul nouveau message d'une taille totale de 9 segments pour chaque module terminal destinataire. Chaque fonction distribuée émet donc, vers les modules terminaux destinataires auxquels elle est affectée, 32 nouveaux messages d'information de 9 segments chacun.

Chaque module terminal destinataire reçoit des messages d'information des 32 fonctions distribuées qui lui sont affectées. Chacun de ces messages de 9 segments contient les paramètres d'information provenant de 32 modules terminaux sources. Ceci explique la taille de 32 x 9 segments indiquée sur la figure 7 pour les messages reçus par le module terminal destinataire OTM1.

On a décrit jusqu'à présent le transfert mutuel des messages d'information dans le sens "aller" - transfert des paramètres d'information depuis les modules terminaux sources vers les modules terminaux destinataires. La partie droite du diagramme de la figure 7 montre aussi le transfert des messages de réponse dans le sens "retour" depuis les modules terminaux destinataires vers les modules terminaux sources. Dans ce cas on utilise le même type de configuration pour les fonctions distribuées, une fonction distribuée étant affectée en réception à 32 modules terminaux destinataires et en émission à 32 modules terminaux sources. Chaque fonction distribuée effectue un traitement similaire à celui de la figure 4, en séparant et regroupant les paramètres de réponse.

Une différence entre le sens aller et le sens retour est à noter dans l'exemple illustré en figure 7; elle concerne la taille supposée pour les paramètres de réponse. Dans le sens aller, comme expliqué plus haut, on a considéré des paramètres d'information d'une taille de deux octets. Dans le sens retour, on a considéré l'hypothèse d'une taille de paramètres de réponse plus petite, à savoir d'un seul octet. Les paramètres de réponse , transmis par un module terminal destinataire vers une fonction distribuée donnée, sont relatifs aux 32 modules terminaux sources auxquels cette fonction distribuée est affectée. Ces paramètres peuvent donc être contenus dans un message de réponse dédié de 5 segments.

Dans le mode de réalisation de la figure 7, le volume du trafic engendré par le transfert des messages de commande est de 32 x 9 + 32 x 5, soit 448 segments en émission comme en réception, pour chaque module terminal comme pour chaque fonction distribuée.

Avec les hypothèses précédentes, les volumes de trafic supplémentaire au niveau d'un module terminal OVHtm, ainsi que ceux du trafic au niveau de chaque fonction distribuée OVHicdf, en émission comme en réception, représente la proportion suivante du débit total DT : $OVHtm / t = OVHtm / r = OVHicdf / t = OVHicdf / r = 448 \times 64 / 2 , 4. ⁢ {10}^{6} . Tr$
soit 1,19 % dans le cas d'une période Tr de 1 ms.

Par comparaison, dans le cas de la seconde approche classique mentionnée plus haut avec des transferts point-à-multipoint, toujours pour N = 1024, S = 8, P = 2 dans le sens aller et P = 1 dans le sens retour, et Tr = 1 ms, les volumes de trafic supplémentaire de commande au niveau d'un module terminal, en émission (OVHtm/t) et en réception (OVHtm/r), représenteraient les proportions suivantes du débit total DT : $OVHtm / t = 10 , 005. ⁢ {10}^{- 6} .1024.9 / 8. ⁢ Tr = 1 , 15 %$ $OVHtm / r = 53 , 3. ⁢ {10}^{- 6} .1024.9 / Tr = 49 % .$

Par rapport à cette seconde approche, l'invention permet ainsi une réduction considérable du trafic supplémentaire de commande en réception (1,19 % au lieu de 49 %), pour une augmentation minime du trafic supplémentaire en émission (1,19 % au lieu de 1,15 %).

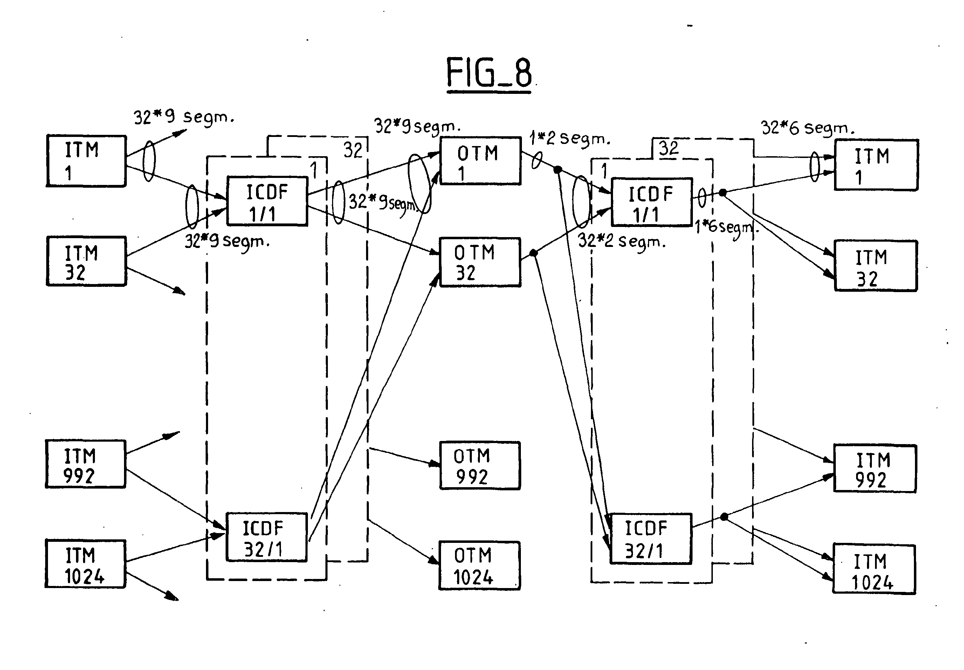

La figure 8 montre une représentation schématique des transferts mutuels de messages de commande par l'intermédiaire des fonctions distribués selon l'invention, en utilisant des paramètres de réponse communs dans le sens retour; dans le sens aller, comme pour la figure 7, les paramètres d'information peuvent représenter une demande d'allocation de largeur de bande pour transmettre des données à travers le réseau, envoyée par chaque module terminal source vers chaque module terminal destinataire. Dans le sens retour, le paramètre de réponse est commun, c'est-à-dire de même valeur pour tous les modules terminaux sources: il peut s'agir par exemple d'un coefficient Z indiquant que, pour chaque module terminal source, la largeur de bande autorisée qui lui est octroyée est égale au produit de la largeur de bande demandée par ce coefficient Z. Ce paramètre de réponse commun est déterminé par le module terminal destinataire en fonction de sa largeur de bande totale actuellement disponible et des diverses demandes d'allocation de largeur de bande reçues de l'ensemble des modules terminaux sources. A partir du paramètre de réponse commun qu'il reçoit d'un module terminal destinataire, chacun des modules terminaux sources utilise ce paramètre de réponse pour déterminer alors la largeur de bande autorisée pour qu'il puisse transmettre des données vers le module terminal destinataire correspondant, en tenant compte de la demande d'allocation de largeur de bande qu'il lui a transmise précédemment.

Est en outre prévu à la figure 8 un système de masque permettant de contrôler la bonne réception par chacun des modules terminaux destinataires des paramètres d'information envoyés par tous les modules terminaux sources. Dans le cas de la figure 7, un tel masque n'est pas utile : en effet, si un paramètre d'information provenant d'un module terminal source n'est pas reçu (par exemple en cas de perte d'un message d'information lors de son transfert à travers le réseau), le module terminal destinataire peut néanmoins transmettre un paramètre de réponse individuel cohérent avec l'absence de paramètre d'information reçu; en cas de faute lors du transfert d'un message d'information dans le sens aller, ou même d'un message de réponse dans le sens retour, le comportement du module terminal source ne dépend que de la réception correcte de ce paramètre de réponse individuel. Typiquement, pour une demande d'allocation de largeur de bande non reçue, aucune largeur de bande n'est octroyée au module terminal source correspondant, ou bien pour un octroi de largeur de bande autorisée non reçu, ce dernier considère également qu'aucune largeur de bande n'est octroyée. Toute perte de message de commande lors des transferts mutuels est sans incidence sur le fonctionnement global du réseau - même si elle est temporairement gênante pour le module terminal source.

Dans le cas de la figure 8, si un paramètre d'information n'est pas reçu par un module de terminaison destinataire, ce dernier élabore la réponse commune sans tenir compte du paramètre d'information non reçu, et ceci peut conduire à une interprétation inadaptée de la réponse commune par le terminal source dont la demande n'a pas pu être prise en compte. Pour pallier cet inconvénient, la mise en oeuvre d'un tel système de masque dans le mode de réalisation de la figure 8 implique l'utilisation d'une configuration symétrique des fonctions distribuées dans le sens aller et dans le sens retour en ce qui concerne leurs modularité et affectation aux modules terminaux, afin de pouvoir effectuer le traitement des masques décrit ci-dessous de façon cohérente dans les fonctions distribuées.

Dans le sens "aller", la configuration est similaire à celle de la figure 7, et n'est pas décrite plus en détail. La seule différence dans le sens aller réside dans le l'élaboration d'un premier masque dans chaque fonction distribuée. Chaque bit de ce masque est représentatif d'une réception correcte par la fonction distribuée d'un message d'information provenant d'un module terminal source. Dans l'exemple, chaque fonction distribuée reçoit des messages d'information de 32 modules terminaux sources, et le masque peut simplement comprendre 32 bits, 1 bit pour chaque module terminal source. La valeur du bit pour un module terminal source indique si un message d'information a été correctement reçu du module terminal source correspondant. Ce premier masque est mémorisé dans la fonction distribuée pour être utilisé lors de la réception ultérieure des messages de réponse.

En outre, comme les fonctions distribuées, chaque module terminal destinataire élabore un second masque, chaque bit de ce masque étant représentatif d'une réception correcte par ce module terminal destinataire d'un message d'information provenant d'une fonction distribuée. Dans l'exemple, chaque module terminal destinataire reçoit des messages d'information de 32 fonctions distribuées, et ce second masque peut simplement comprendre 32 bits, 1 bit pour chaque fonction distribuée. La valeur du bit pour une fonction distribuée indique si un message d'information a été correctement reçu de la fonction distribuée correspondante. Ce second masque est alors inséré dans le message de réponse commun préparé par le module terminal destinataire pour être transmis aux fonctions distribuées. Dans le sens retour, les paramètres de réponse sont communs; dans l'exemple on a considéré un paramètre d'information commun d'une taille d'un octet. A ce paramètre de réponse commun s'ajoute ce second masque de 32 bits, soit 4 octets. Le message de réponse commun peut donc présenter une taille de 2 segments. Ce message est transmis vers les 32 fonctions distribuées qui sont affectées au module terminal destinataire. Il y a donc un transfert point-à-multipoint d'un message de réponse commun de 2 fenêtres par chaque terminal destinataire vers 32 fonctions distribuées, comme indiqué sur la figure 8.

Une fonction distribuée reçoit un message de réponse commun de chacun des 32 modules terminaux destinataires auxquels elle est affectée; ce message comprend d'une part le paramètre de réponse commun et d'autre part le second masque élaboré par le module terminal destinataire. La fonction distribuée, en examinant le bit qui lui correspond dans le masque reçu, peut savoir si le module terminal destinataire dont provient le message de réponse a reçu correctement le message d'information qu'elle lui avait transmis dans le sens aller, et peut donc savoir si le module terminal destinataire a pu tenir compte des paramètres d'information transmis dans le sens aller.

La fonction distribuée regroupe alors les paramètres de réponse communs transmis par les modules de terminaison destinataires. Pour 32 modules terminaux destinataires qui transmettent chacun un paramètre de réponse commun, il existe donc 32 paramètres de réponse d'un octet chacun, soit quatre segments. En outre, la fonction distribuée prépare un troisième masque à transmettre aux modules terminaux sources, ce troisième masque étant élaboré à partir d'une part du premier masque qu'elle a élaboré et mémorisé précédemment lors du transfert dans le sens aller, et d'autre part du second masque qu'elle reçoit de chaque module terminal destinataire. Ce troisième masque est représentatif du fait qu'un paramètre d'information transmis par un module terminal source a été correctement reçu par la fonction distribuée destinataire concernée, et du fait que le nouveau message d'information transmis par cette fonction distribuée a été correctement reçu par le module terminal destinataire. En outre, ce troisième masque permet aussi de valider la réception correcte de chaque message de réponse provenant des modules terminaux destinataires. Dans la mesure où une fonction distribuée est affectée à 32 modules terminaux sources, ce troisième masque peut simplement présenter 32 bits; l'ensemble du message de réponse tient donc dans 6 segments.

Chaque module terminal source reçoit alors un message de 6 segments de chacune des 32 fonctions distribuées qui lui sont affectées. Chaque message provenant d'une fonction distribuée comprend 32 paramètres de réponse communs relatifs aux 32 modules terminaux destinataires affectés à cette fonction distribuée, et un masque dont chacun des 32 bits est représentatif de l'intégrité des transferts mutuels des paramètres d'information transmis par ce module terminal source dans le sens aller et des paramètres de réponse transmis par les modules terminaux destinataires dans le sens retour.

L'utilisation d'un tel système de masques permet à un module terminal source de valider son interprétation des paramètres de réponse communs, en fonction de l'intégrité du transfert des paramètres qu'il échange avec les modules terminaux destinataires. Bien entendu, si une telle protection contre les pertes de message n'est pas utile, on peut simplement transmettre dans le sens retour le paramètre de réponse commun, sans pour autant utiliser un système de masques comme dans le mode de réalisation de la figure 8. Si c'est le cas, on peut remarquer qu'une solution alternative consiste à ne pas prévoir des fonctions distribuées dans le sens retour, puisqu'il suffit de transmettre les paramètres de réponse communs, directement depuis les modules terminaux destinataires par transfert de messages point-à-multipoint vers tous les modules terminaux sources.

Dans le mode de réalisation de la figure 8, le volume du trafic supplémentaire de messages de commande pour chaque module terminal est de 32 x 9 + 1 x 2, soit 290 segments en émission, et de 32 x 9 + 32 x 6, soit 480 segments en réception ; pour chaque fonction distribuée, le trafic de messages de commande est de 32 x 9 + 1 x 6, soit 294 segments en émission, et de 32 x 9 + 32 x 2, soit 352 segments en réception.

Avec les hypothèses précédentes et pour Tr = 1 ms, on obtient les valeur suivantes de volume de trafic de commande exprimées en proportion du débit total DT:
- pour chaque module terminal en émission : $OVHtm / t = 290 \times 64 / 2 , 4. ⁢ {10}^{6} = 0 , 77 %$
- pour chaque module terminal en réception : $OVHtm / r = 480 \times 64 / 2 , 4. ⁢ {10}^{6} = 1 , 28 %$
- pour chaque fonction distribuée en émission : $OVHicdf / t = 294 \times 64 / 2 , 4. ⁢ {10}^{6} = 0 , 78 %$
- pour chaque fonction distribuée en réception : $OVHicdf / r = 352 \times 64 / 2 , 4. ⁢ {10}^{6} = 0 , 94 % .$

Par comparaison, dans le cas de la seconde approche classique mentionnée plus haut avec des transferts point-à-multipoint, toujours pour N = 1024, S = 8, P = 2 dans le sens aller et P = 1 dans le sens retour, et Tr = 1 ms, les volumes de trafic supplémentaire de commande au niveau d'un module terminal, en émission (OVHtm/t) et en réception (OVHtm/r), représenteraient les proportions suivantes du débit total DT : $OVHtm / t = 10 , 005. ⁢ {10}^{- 6} .1024.9 / 8. ⁢ Tr = 1 , 15 %$ $OVHtm / r = 53 , 3. ⁢ {10}^{- 6} .1024.9 / Tr = 49 % .$

Par rapport à cette seconde approche, l'invention permet encore une réduction considérable du trafic supplémentaire en réception.

Si l'on ne prévoit pas un système de masques, la taille des messages de réponse communs transmis par les fonctions distribuées aux modules terminaux sources est de 5 segments au lieu de 6. Alors, le volume du trafic supplémentaire de messages de commande pour chaque module terminal est de 32 x 9 + 1 x 2, soit 290 segments en émission, et de 32 x 9 + 32 x 5, soit 448 segments en réception; pour chaque fonction distribuée, le trafic de messages de commande est de 32 x 9 + 1 x 5, soit 293 segments en émission, et de 32 x 9 + 32 x 2, soit 352 segments en réception. Avec les hypothèses précédentes et pour Tr = 1 ms, on obtient alors les valeur suivantes de volumes de trafic de commande exprimées en proportion du débit total DT:
- pour chaque module terminal en émission : $OVHtm / t = 290 \times 64 / 2 , 4. ⁢ {10}^{6} = 0 , 77 %$
- pour chaque module terminal en réception : $OVHtm / r = 448 \times 64 / 2 , 4. ⁢ {10}^{6} = 1 , 19 %$
- pour chaque fonction distribuée en émission : $OVHicdf / t = 293 \times 64 / 2 , 4. ⁢ {10}^{6} = 0 , 78 %$
- pour pour chaque fonction distribuée en réception : $OVHicdf / r = 352 \times 64 / 2 , 4. ⁢ {10}^{6} = 0 , 94 % .$

Si l'on ne prévoit pas de masques et si l'on utilise la solution alternative consistant à ne pas prévoir des fonctions distribuées dans le sens retour, la taille des messages de réponse communs transférés directement en mode point-à-multipoint par chaque module terminal destinataire vers tous les modules terminaux sources est de 2 segments. Alors, le volume du trafic supplémentaire de messages de commande pour chaque module terminal est encore de 32 x 9 + 1 x 2, soit 290 segments en émission, mais de 32 x 9 + 1024 x 2, soit 2336 segments en réception; pour chaque fonction distribuée, le trafic de messages de commande est seulement de 32 x 9, soit 288 segments en émission et en réception.

Avec les hypothèses précédentes et pour Tr = 1 ms, on obtient les valeurs suivantes de volumes de trafic de commande exprimées en proportion du débit total DT:
- pour chaque module terminal en émission : $OVHtm / t = 290 \times 64 / 2 , 4. ⁢ {10}^{6} = 0 , 77 %$
- pour chaque module terminal en réception : $OVHtm / r = 2336 \times 64 / 2 , 4. ⁢ {10}^{6} = 6 , 24 %$
- pour chaque fonction distribuée en émission comme en réception : $OVHicdf / t = OVHicdf / r = 288 \times 64 / 2 , 4. ⁢ {10}^{6} = 0 , 76 % .$

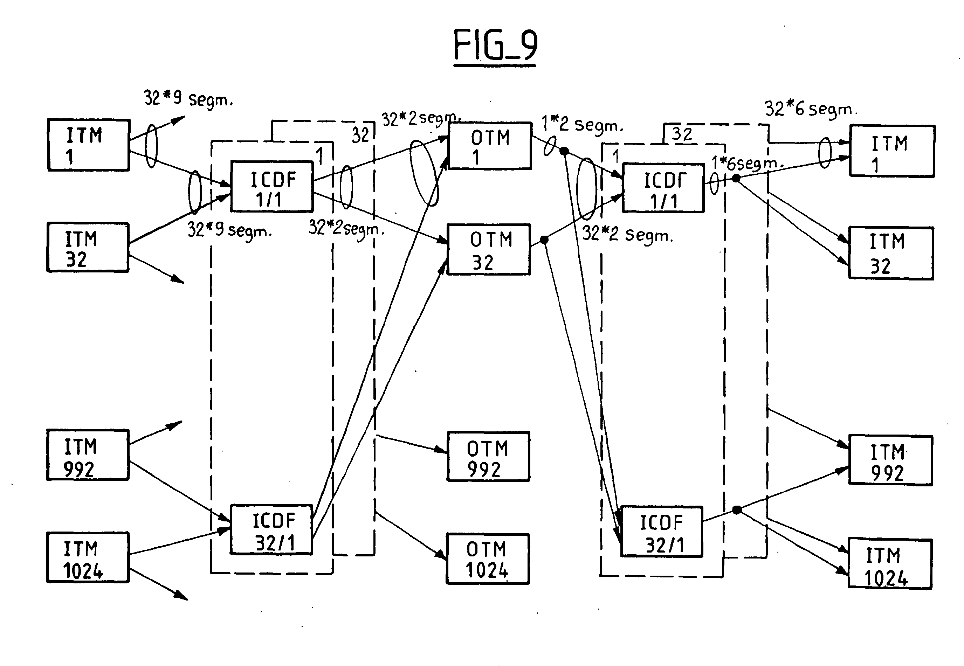

La figure 9 montre une représentation schématique des transferts mutuels de messages de commande par l'intermédiaire des fonctions distribués selon l'invention, en utilisant des paramètres d'information agrégés dans le sens aller et des paramètres de réponse communs dans le sens retour. Dans le mode de réalisation de la figure 9, dans le sens aller, le traitement effectué par la fonction distribuée comprend l'agrégation des paramètres d'information relatifs à un même module terminal destinataire, et provenant d'une pluralité de modules terminaux sources, pour élaborer au moins un paramètre global, dit agrégé, relatif à chaque module terminal destinataire. Dans l'exemple où chaque paramètre d'information représente comme précédammant une demande d'allocation de largeur de bande pour transmettre des données à travers le réseau, envoyée par chaque module terminal source vers chaque module terminal destinataire, chaque fonction distribuée peut ne transmettre à un module terminal destinataire que la somme des demandes d'allocation de largeur de bande formulées par les modules terminaux sources auxquels elle est affectée, ou encore que la moyenne et/ou l'écart type de ces demandes. De fait, chaque module terminal destinataire peut aussi bien élaborer un paramètre de réponse commun en tenant compte des valeurs agrégées de demandes d'allocation de largeur de bande, que sur la base des valeurs individuelles de demandes d'allocation de largeur de bande comme mentionné précédamment.

On utilise dans le mode de réalisation de la figure 9 la même configuration pour les différentes fonctions distribuées que dans les modes de réalisation des figures 7 et 8. Chaque module terminal source transmet donc, comme dans le cas de la figure 8, 32 messages d'information de 9 segments vers les 32 fonctions distribuées qui lui sont affectées.

Chaque fonction distribuée reçoit les messages d'information provenant de 32 modules terminaux sources. Elle sépare les paramètres d'information relatifs à un même module terminal destinataire, et à partir de ces paramètres, élabore au moins un paramètre global agrégé relatif à ce module terminal destinataire; comme expliqué plus haut, il peut s'agir par exemple d'une sommation, ou d'un calcul de la moyenne des valeurs individuelles de paramètres d'information reçus.

Chaque fonction distribuée transmet ensuite vers les 32 modules terminaux destinataires auxquelles elle est affectée des nouveaux messages d'information comprenant les paramètres agrégés respectifs ainsi élaborés. Dans l'exemple, on suppose que le paramètre agrégé présente une taille de deux octets, comme les paramètres d'information transmis par les modules terminaux source. Les nouveaux messages transmis par la fonction distribuée vers chacun des 32 modules peuvent donc être des messages d'information d'une taille de deux segments. Chaque fonction distribuée peut aussi, comme dans le mode de réalisation de la figure 8, élaborer et mémoriser un premier masque représentatif de la réception correcte du paramètre d'information transmis par chaque module terminal source.

Chaque module terminal destinataire reçoit depuis chacune des 32 fonctions distribuées qui lui sont affectées un message d'information transmettant le paramètre agrégé élaboré par la fonction distribuée. A partir des paramètres agrégés reçus des 32 fonctions distribuées qui lui sont affectées, chaque module terminal destinataire peut élaborer un paramètre de réponse commun, comme dans le cas de la figure 8, ainsi qu'un second masque représentatif de la réception correcte du paramètre d'information agrégé transmis par chaque fonction distribuée.

Dans le sens retour, le transfert des paramètres de réponse commun et du second masque peut s'effectuer comme expliqué en référence à la figure 8.

Comme dans le cas de la figure 8, on peut remarquer que, si on ne prévoit pas un système de masques, les modules terminaux destinataires peuvent alors transférer directement ces paramètres d'information communs en mode point-à-multipoint vers tous les modules terminaux sources.

Avec le système de masques comme dans le cas de la figure 8, le volume du trafic supplémentaire de messages de commande pour chaque module terminal est de 32 x 9 + 1 x 2, soit 290 segments en émission, et de 32 x 2 + 32 x 6, soit 256 segments en réception ; pour chaque fonction distribuée, le trafic de messages de commande est de 32 x 2 + 1 x 6, soit 70 segments en émission, et de 32 x 9 + 32 x 2, soit 352 fenêtres en réception.

Avec les hypothèses précédentes et pour Tr = 1 ms, on obtient les valeurs suivantes de volumes de trafic de commande exprimées en proportion du débit total DT:
- pour chaque module terminal en émission : $OVHtm / t = 290 \times 64 / 2 , 4. ⁢ {10}^{6} = 0 , 77 %$
- pour chaque module terminal en réception : $OVHtm / r = 256 \times 64 / 2 , 4. ⁢ {10}^{6} = 0 , 68 %$
- pour chaque fonction distribuée en émission : $OVHicdf / t = 70 \times 64 / 2 , 4. ⁢ {10}^{6} = 0 , 19 %$
   pour chaque fonction distribuée en réception : $OVHicdf / r = 352 \times 64 / 2 , 4. ⁢ {10}^{6} = 0 , 94 % .$

Par comparaison, dans le cas de la seconde approche classique mentionnée plus haut avec une transmission point-à-multipoint, toujours pour N = 1024, S = 8, P = 2 dans le sens aller et P = 1 dans le sens retour, et Tr = 1 ms, les volumes de trafic supplémentaire de commande au niveau d'un module terminal, en émission (OVHtm/t) et en réception (OVHtm/r), représenteraient les proportions suivantes du débit total DT : $OVHtm / t = 10 , 005. ⁢ {10}^{- 6} .1024.9 / 8. ⁢ Tr = 1 , 15 %$ $OVHtm / r = 53 , 3. ⁢ {10}^{- 6} .1024.9 / 8. ⁢ Tr = 49 % .$

Par rapport à cette seconde approche, l'invention permet encore une réduction considérable du trafic supplémentaire en réception.

Si l'on ne prévoit pas de masques, mais si l'on utilise néanmoins des fonctions distribuées dans le sens retour, la taille des messages de réponse communs transférés en mode point-à-point par chaque fonction distribuée vers les modules terminaux sources est de 5 segments au lieu de 6. Alors, le volume du trafic supplémentaire de messages de commande pour chaque module terminal est encore de 32 x 9 + 1 x 2, soit 290 segments en émission, mais de 32 x 2 + 32 x 5, soit 224 segments en réception; pour chaque fonction distribuée, le trafic de messages de commande est de 32 x 2 + 1 x 5, soit 69 segments en émission , et de 32 x 9 + 32 x 2, soit 352 segments en réception.

Avec les hypothèses précédentes et pour Tr = 1 ms, on obtient les valeurs suivantes de volumes de trafic de commande exprimées en proportion du débit total DT:
- pour chaque module terminal en émission : $OVHtm / t = 290 \times 64 / 2 , 4. ⁢ {10}^{6} = 0 , 77 %$
- pour chaque module terminal en réception : $OVHtm / r = 224 \times 64 / 2 , 4. ⁢ {10}^{6} = 0 , 60 %$
- pour chaque fonction distribuée en émission : $OVHicdf / t = 69 \times 64 / 2 , 4. ⁢ {10}^{6} = 0 , 18 %$
- pour chaque fonction distribuée en réception : $OVHicdf / r = 352 \times 64 / 2 , 4. ⁢ {10}^{6} = 0 , 94 % .$

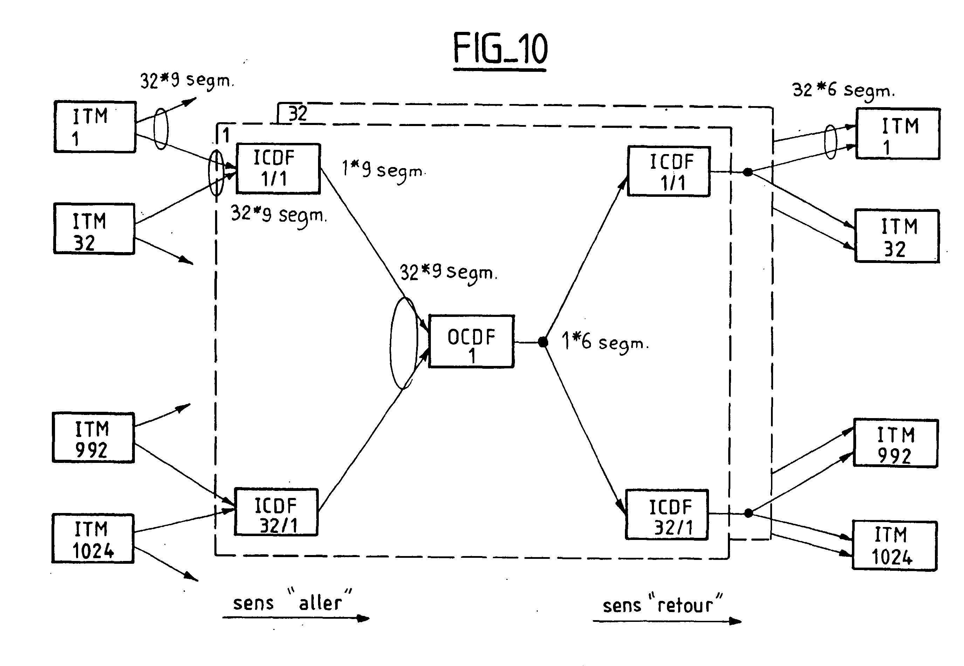

La figure 10 montre une représentation schématique des transferts mutuels de messages de commande par l'intermédiaire de fonctions distribués selon l'invention, utilisant des paramètres de réponse communs dans le sens retour comme dans le cas des figures 8 et 9, mais dans le cas où les processus de commande destinataires, effectués par les modules terminaux destinataires dans les figures précédentes 7 à 9, sont ici effectués par une fonction dite destinataire, chaque fonction destinataire étant chargée de traiter ces processus commande destinataires pour un groupe donné de modules terminaux destinataires. Le mode de réalisation de la figure 10 repose sur la constatation que le processus destinataire qui consiste à élaborer, pour chaque module terminal destinataire, un paramètre de réponse commun ne doit pas nécessairement s'effectuer localement dans le module terminal destinataire correspondant ; alternativement ce processus peut être délocalisé et s'effectuer dans une fonction dite destinataire qui est affectée pour cette tâche pour un groupe donné de modules terminaux destinataires.

Comme expliqué plus haut en ce qui concerne les fonctions intermédiaires, le terme de "fonction", ici utilisé pour les fonctions destinataires, est indépendant de la réalisation matérielle de la fonction, à savoir sous forme de modules serveurs intermédiaires connectés au réseau et dédiés par fonction distribuée, ou bien sous forme de moyens additionnels ajoutés à certains modules terminaux qui agissent alors également comme fonction intermédiaire.

On prévoit une pluralité de fonctions destinataires, chacune étant affectée à un ensemble de modules terminaux destinataires, et à un ensemble de fonctions distribuées. Dans l'exemple de la figure 10, on prévoit une fonction destinataire par groupe de 32 modules terminaux destinataires affectés à un ensemble de 32 fonctions distribuées. En reprenant les notations précédentes, une fonction intermédiaire ICDFi/j est affectée à 32 modules terminaux sources ITM(32.i - 31) à ITM(32.i), et elle transmet des messages d'information vers une fonction destinataire FDGMTj. Les indices i et j sont entiers et varient entre 1 et 32.

Une fonction destinataire FDGMTj est affectée à 32 fonctions intermédiaires ICDFi/j, i variant de 1 à 32, et est affectée à 32 modules terminaux destinataires OTM(32.j-31) à OTM(32j). Chaque fonction destinataire connaît les paramètres locaux des modules terminaux destinataires auxquels elle est affectée, et peut en conséquence effectuer en lieu et place de chacun de ces modules destinataires les processus destinataires de calculs nécessaires pour élaborer des paramètres de réponse communs à partir des paramètres d'information agrégés élaborés et transmis par les fonctions intermédiaires.

Autrement dit, une fonction intermédiaire est affectée à un groupe de modules terminaux destinataires qui sont représentés pour cette tâche par une fonction destinataire agissant à leur place pour effectuer ces processus de commande destinataires.

Les transferts de paramètres de commande s'effectuent alors de la façon suivante. Chaque module terminal source transmet, comme dans les modes de réalisation des figures 7, 8 ou 9, des messages d'information vers les 32 fonctions intermédiaires qui lui sont affectées.

Chaque fonction intermédiaire reçoit les messages des 32 modules terminaux sources auxquels elle est affectée; elle traite les paramètres reçus comme dans le cas de la figure 9, en élaborant des paramètres agrégés pour chaque module terminal destinataire. A l'inverse du cas de la figure 9, au lieu de transmettre les paramètres globaux aux 32 modules terminaux destinataires auxquels elle est affectée, la fonction intermédiaire transmet alors un nouveau message d'information contenant ces 32 paramètres globaux, à la fonction destinataire qui lui est affectée pour représenter ce groupe de 32 modules terminaux destinataires. Le nouveau message correspondant peut alors présenter une taille totale de 9 segments, dans le cas où les paramètres globaux ont une taille de 2 octets.

Une fonction destinataire reçoit, de chacune des 32 fonctions intermédiaires, des paramètres agrégés relatifs aux 32 modules terminaux destinataires qu'elle représente. En lieu et place de chacun de ces 32 modules terminaux destinataires, la fonction destinataire peut élaborer chacun des 32 paramètres communs de réponse, ce processus de commande destinataire étant similaire à celui élaboré dans le cas de la figure 9; chaque paramètre de réponse commun relatif à un module terminal destinataire peut comme dans l'exemple précédent présenter une taille de 1 octet. La fonction destinataire peut aussi élaborer un second masque représentatif d'une réception correcte des messages d'information provenant des 32 fonctions intermédiaires. Un tel masque, comme dans les cas précédents, a une taille de 32 bits.

Dans le sens retour, la fonction destinataire transmet ensuite, en mode point-à-multipoint vers toutes les fonctions intermédiaires qui lui sont affectées, un message de réponse comprenant les paramètres de réponse communs calculés pour les 32 modules terminaux destinataires, ainsi que le second masque. Ce message a une taille de 6 segments, soit un segment d'en-tête, quatre segments pour transporter les 32 octets de paramètres de réponse communs et un segment pour transporter les 4 octets de masque.

Chaque fonction intermédiaire reçoit ce message de réponse de la part de la fonction destinataire représentant les 32 modules terminaux destinataires auxquels elle est affectée. Elle dispose alors des paramètres de réponse communs pour chacun des modules terminaux destinataires, et du second masque associé. Elle peut donc procéder comme expliqué en référence à la figure 8, et transmettre en mode point-à-multipoint à tous les modules terminaux sources auxquels elle est affectée, les paramètres de réponse communs relatifs à ces 32 modules terminaux destinataires.

Enfin, chaque module terminal source reçoit, de la part des 32 fonctions distribuées qui lui sont affectées, les paramètres de réponse communs, et les masques, comme expliqué en référence à la figure 8. Dans le mode de réalisation de la figure 10, le volume de trafic supplémentaire de messages de commande pour chaque module terminal est de 32 x 9, soit 288 segments en émission, et de 32 x 6, soit 192 segments en réception. Pour chaque fonction distribuée, le trafic de messages de commande est de 1 x 9 + 1 x 6, soit 15 segments en émission, et de 32 x 9 + 1 x 6, soit 294 segments en réception. Pour chaque fonction destinataire, le trafic de messages de commande est de 6 segments en émission, et de 32 x 9, soit 288 segments en réception.

Avec les hypothèses précédentes et pour Tr = 1 ms, on obtient les valeurs suivantes de volume de trafic de commande exprimées en proportion du débit total DT:
- pour chaque module terminal en émission : $OVHtm / t = 288 \times 64 / 2 , 4. ⁢ {10}^{6} = 0 , 77 %$
   pour chaque module terminal en réception : $OVHtm / r = 192 \times 64 / 2 , 4. ⁢ {10}^{6} = 0 , 51 %$
- pour chaque fonction distribuée en émission : $OVHicdf / t = 15 \times 64 / 2 , 4. ⁢ {10}^{6} = 0 , 04 %$
- pour chaque fonction distribuée en réception : $OVHicdf / r = 294 \times 64 / 2 , 4. ⁢ {10}^{6} = 0 , 79 %$
- pour chaque fonction destinataire en émission : $OVHt / fdgmt / t = 6 \times 64 / 2 , 4. ⁢ {10}^{6} = 0 , 02 %$
- pour chaque fonction destinataire en réception : $OVHt / fdgmt / r = 288 \times 64 / 2 , 4. ⁢ {10}^{6} = 0 , 77 % .$

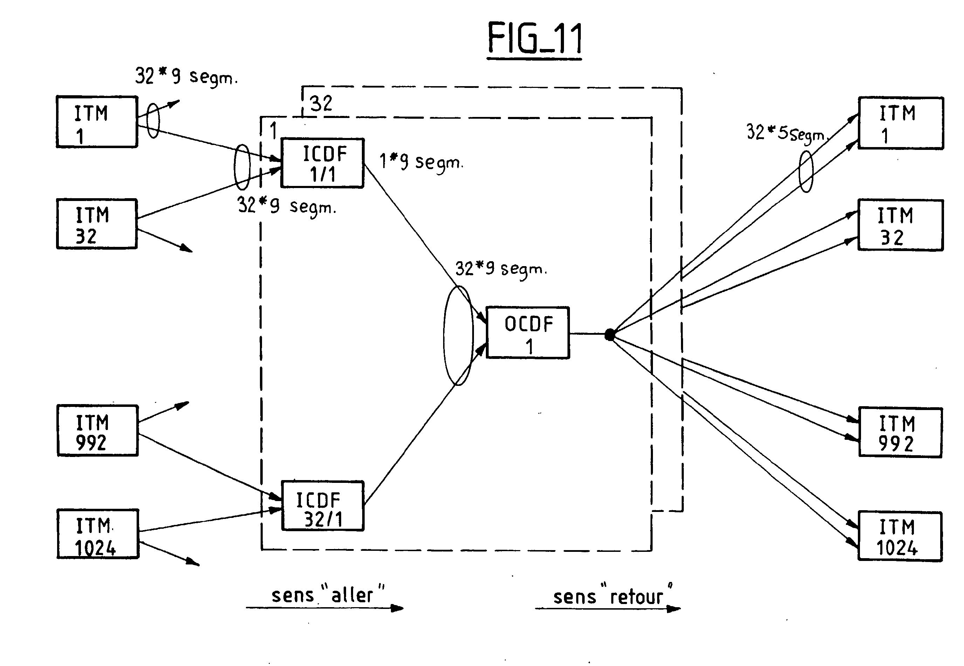

La figure 11 montre une représentation schématique similaire à celle de la figure 10, mais sans utiliser de masques; dans le mode de réalisation de la figure 11, on n'élabore pas de masque dans le sens aller dans les fonctions intermédiaires, ni dans les fonctions destinataires; dans le sens retour, les paramètres de réponse communs sont alors directement transmis en mode point-à-multipoint depuis les fonctions destinataires vers tous les modules terminaux sources. La taille de ces messages de réponse communs est dans ce cas des messages de 5 segments, puisqu'aucun masque n'est transmis.

Dans le mode de réalisation de la figure 11, le volume de trafic supplémentaire de messages de commande pour chaque module terminal est de 32 x 9, soit 288 segments en émission, et de 32 x 5, soit 160 segments en réception. Pour chaque fonction distribuée, le trafic de messages de commande est de 1 x 9 segments en émission, et de 32 x 9 soit 288 segments en réception. Pour chaque fonction destinataire, le trafic de messages de commande est de 1 x 5 segments en émission, et de 32 x 9 soit 288 segments en réception.

Avec les hypothèses précédentes et pour Tr = 1 ms, on obtient les valeurs suivantes de volume de trafic de commande exprimées en proportion du débit total DT:
- pour chaque module terminal en émission : $OVHtm / t = 288 \times 64 / 2 , 4. ⁢ {10}^{6} = 0 , 77 %$
- pour chaque module terminal en réception : $OVHtm / r = 160 \times 64 / 2 , 4. ⁢ {10}^{6} = 0 , 43 %$
- pour chaque fonction distribuée en émission : $OVHicdf / t = 9 \times 64 / 2 , 4. ⁢ {10}^{6} = 0 , 02 %$
- pour chaque fonction distribuée en réception : $OVHtm / t = 288 \times 64 / 2 , 4. ⁢ {10}^{6} = 0 , 77 %$
- pour chaque fonction destinataire en émission : $OVHt / fdgmt / t = 5 \times 64 / 2 , 4. ⁢ {10}^{6} = 0 , 013 %$
- pour chaque fonction destinataire en réception : $OVHt / fdgmt / r = 288 \times 64 / 2 , 4. ⁢ {10}^{6} = 0 , 77 % .$

On détaille maintenant les exemples possibles d'implémentation des fonctions distribuées. Comme indiqué plus haut, leur localisation physique, comme celle des fonctions destinataires, est concevable soit sous forme de modules serveurs intermédiaires connectés au réseau et dédiés par fonction distribuée (et/ou destinataire), soit sous forme de moyens additionnels ajoutés à certains modules terminaux qui agissent alors également comme fonction distribuée (et/ou destinataire). On décrit dans la suite l'implémentation des fonctions distribuées dans le sens aller. L'implémentation dans le sens retour est similaire.

Une première solution pour implémenter les fonctions distribuées consiste à utiliser une solution logicielle dans un processeur (microprocesseur, un microcontrôleur ou autre). Une telle solution logicielle implique d'associer au processeur une interface d'entrée/sortie adaptée au protocole de transmission des messages de commande (d'information dans le sens aller).

Dans le mode de réalisation des figures 4, 7 et 8, le traitement comprend une étape de séparation des paramètres transmis par les modules terminaux entrants MTE, puis une étape de regroupement de ces paramètres en fonction du module terminal sortant MTS auquel ils sont relatifs. Pour cela, le processeur reçoit ces messages et stocke dans une table de données les paramètres de commande (d'information dans le sens aller) qu'ils contiennent. Chaque emplacement de cette table de données correspond à un paramètre d'ordre "i, j", i représentant l'ordre ou l'indice d'un MTE dont un message est reçu (module terminal source dans le sens aller), et j représentant l'indice d'un MTS auquel un message est transmis (module terminal destinataire dans le sens aller). Après avoir reçu les différents messages de commande, le processeur regroupe les paramètres de commande d'ordre j stockés dans la table de données pour assembler successivement chaque nouveau message de commande à transmettre.

Dans le mode de réalisation des figures 9 à 11, le traitement comprend la séparation des paramètres de commande (d'information dans le sens aller) des messages reçus, une étape de regroupement de ces paramètres en fonction du MTS (module terminal destinataire dans le sens aller), et une étape de calcul d'un paramètre global agrégé relatif à ce MTS. Alternativement, un traitement équivalent peut consister à effectuer le calcul de chaque paramètre agrégé de façon progressive lors de la réception de chaque message de commande. Par exemple dans le cas d'une agrégation par sommation, le processeur gère une table de données dont chaque emplacement correspond à un paramètre agrégé courant d'ordre " i", i représentant l'indice d'un MTS auquel un message est transmis (module terminal destinataire dans le sens aller). Lorsqu'un message est reçu, le processeur met à jour la table de données en sélectionnant chaque paramètre agrégé courant d'ordre " stocké dans la table de données, en additionnant la valeur de ce paramètre courant avec la valeur de chaque paramètre de commande (d'information dans le sens aller) d'ordre j, puis en mémorisant le résultat de cette addition comme nouvelle valeur du paramètre agrégé courant d'ordre j. Après avoir reçu les différents messages de commande, le processeur dispose, dans chaque emplacement de la table de données, de la valeur de chaque paramètre agrégé d'ordre j, qu'il utilise pour générer successivement chaque nouveau message de commande à transmettre.

Pour générer chaque nouveau message à transmettre, le processeur prépare le segment d'en-tête en y plaçant l'information d'acheminement appropriée, c'est-à-dire, dans le sens aller, l'adresse du module terminal destinataire, ou dans le cas de la figure 10 ou 11, l'adresse de la fonction destinataire, et dans le sens retour, l'adresse du ou des modules terminaux sources; les paramètres de commande à transmettre sont placés dans les segments suivants du nouveau message. Une telle solution logicielle est simple à mettre en oeuvre, mais peut ne pas être suffisamment rapide pour des périodes Tr très courtes, par exemple de l'ordre de la milliseconde.

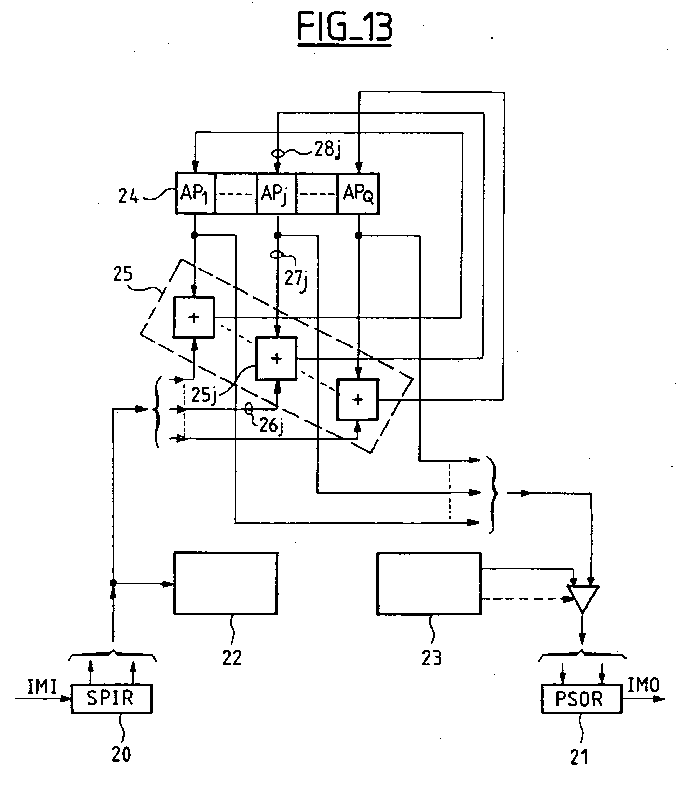

La figure 12 montre un schéma d'implémentation matérielle d'une fonction distribuée, dans le cas où le traitement est un traitement de séparation et de regroupement des paramètres. Une telle réalisation matérielle permet d'obtenir des durées de traitement plus faibles, pour des applications mettant en oeuvre un grand nombre de messages à traiter durant des périodes Tr très courtes. Le dispositif de la figure 12 est maintenant décrit pour le traitement des paramètres d'information dans le sens aller. Ce dispositif présente un registre d'entrée série/parallèle 1, qui reçoit sur une entrée série les messages d'information provenant des modules terminaux sources et qui délivre en sortie les segments du message sur une sortie parallèle. Le segment d'en-tête est fourni à un contrôleur de réception de message 3, tandis que les segments suivants contenant les paramètres d'information sont fournis à l'entrée du dispositif de mémorisation et conversion de messages 5. Le contrôleur de réception de message 3 a pour fonction de commander l'écriture des paramètres reçus dans le dispositif de mémorisation et conversion 5, comme schématisé par la flèche 7 de validation d'écriture.

Le dispositif de mémorisation et conversion de messages 5 est une mémoire optimisée pour le traitement effectué par la fonction distribuée, ayant une entrée parallèle et une sortie parallèle, mais dans laquelle l'écriture s'effectue suivant une ligne de la mémoire, tandis que la lecture s'effectue suivant une colonne de la mémoire. Dans l'exemple de réalisation décrit, on suppose une opération d'écriture globale pour l'ensemble des S segments d'un message contenant des paramètres (une solution alternative consiste par exemple à effectuer une opération d'écriture pour chaque segment reçu); pour chaque opération d'écriture des paramètres d'un message, le contrôleur de réception de message 3 détermine l'adresse de la ligne de mémoire requise en fonction de l'adresse du module terminal qui a transmis le message. Si les paramètres contenus dans les messages générés par les différents modules terminaux sources sont placés dans un ordre identique - par exemple l'ordre croissant des identités de modules terminaux destinataires - il suffit d'introduire directement les paramètres de chaque message reçu dans la ligne du dispositif de mémoire 5 correspondant au module terminal source d'ordre i qui a transmis le message, pour pouvoir ensuite lire directement, dans chaque colonne du dispositif de mémoire, les paramètres relatifs à un module terminal destinataire d'ordre j donné à transmettre dans un nouveau message d'information.

A cet effet, le dispositif de la figure 12 comprend encore un contrôleur de transmission de message 9; ce contrôleur a pour fonction de commander, pour chaque nouveau message d'information à transmettre, la lecture, dans le dispositif de mémorisation et conversion 5, des paramètres d'information contenus dans la colonne de la mémoire correspondant au module terminal destinataire concerné, comme schématisé sur la figure 12 par la flèche 11 de validation de lecture. Le contrôleur de transmission de message 9 génère aussi le segment d'en-tête contenant les informations d'acheminement en fonction de l'identité du module terminal destinataire correspondant à la colonne lue, comme symbolisé par la flèche 13.

Le multiplexeur 15, qui reçoit d'une part le contenu de la colonne lue dans dispositif de mémorisation et conversion 5, et d'autre part le segment d'en-tête généré par le contrôleur de transmission de message 9, fournit en sortie le contenu du nouveau message qui est appliqué à une entrée parallèle d'un registre de sortie 17 à entrée parallèle et à sortie série. La sortie de ce registre fournit le message prêt à la transmission.

La figure 13 montre un schéma d'implémentation matérielle d'une fonction distribuée, dans le cas où le traitement est un traitement d'agrégation, par exemple de sommation, des paramètres d'information. Comme dans la figure 12, on utilise typiquement un registre d'entrée série/parallèle 20, un registre d'entrée série/parallèle 21, un contrôleur de réception de message 22, et un contrôleur de transmission de message 23. Dans l'exemple de la solution décrite, on suppose que les paramètres contenus dans les messages générés par les différents modules terminaux sources sont placés dans un ordre identique, par exemple l'ordre croissant des identités de modules terminaux destinataires. Le traitement par sommation peut être effectué en calculant chaque paramètre agrégé de façon progressive lors de la réception de chaque message de commande. Pour cela, on utilise le registre de sommation de paramètres 24 de la figure 13, qui mémorise Q valeurs de paramètre agrégé courant d'ordre " j", j représentant l'indice d'un module terminal destinataire. On utilise en outre un ensemble 25 de Q additionneurs, un additionneur pour chacun des Q paramètres relatifs aux Q modules terminaux destinataires d'ordre j. Pour chaque paramètre d'ordre j, l'additionneur 25j correspondant reçoit, sur une première entrée, la sortie parallèle 26j du registre d'entrée 20 et, sur une deuxième entrée, la sortie parallèle 27j du registre de sommation 25, et il fournit en sortie le résultat de l'addition qui est connectée à l'entrée parallèle 28j du registre 24 correspondant à ce paramètre.

Lorsqu'un message est reçu, on effectue ainsi Q additions en parallèle entre les Q valeurs des paramètres agrégés courant mémorisées dans le registre de sommation 24, et les Q valeurs respectives des paramètre d'information reçus dans le registre d'entrée 20, puis on met à jour le registre de sortie 25 en y inscrivant les résultats des Q additionneurs, comme nouvelles valeurs cumulées des Q paramètres agrégés courants. Après avoir reçu les différents messages de commande, le registre de sommation de paramètres 24 contient les valeurs finales de chacun des Q paramètres agrégé d'ordre j. Alors le contrôleur de transmission de message 23 commande la génération des nouveaux messages d'information à transmettre, en associant un ou plusieurs paramètres agrégés du registre 24 avec un segment d'entête contenant les informations d'acheminement en fonction de l'identité du module terminal destinataire concerné (ou dans le cas de la figure 10 ou 11, l'adresse de la fonction destinataire), chaque nouveau message assemblé étant fourni à l'entrée du registre de sortie parallèle/série 21. D'autres variantes de réalisation sont possibles en utilisant un nombre réduit d'additionneur (ou même un seul additionneur), un additionneur donné étant utilisé successivement pour plusieurs paramètres lors de la réception d'un message.

Bien entendu, la présente invention n'est pas limitée aux exemples et modes de réalisation décrits et représentés, mais elle est susceptible de nombreuses variantes accessibles à l'homme de l'art. Dans l'exemple de la figure 4, les messages reçus par la fonction distribuée depuis les modules terminaux sources, et les messages transmis par la fonction distribuée vers les modules terminaux destinataires présentent exactement la même structure. Ceci n'est pas indispensable à la mise en oeuvre de l'invention, et l'on pourrait imaginer par exemple un nombre de segments différent.

Les exemples des figures 7 à 11 peuvent être généralisés à d'autres cardinaux d'ensembles de modules terminaux, ou à d'autres schémas d'affectation des fonctions intermédiaires ou des fonctions destinataires. On peut utiliser d'autres modes de réalisation matérielle ou logicielle que ceux décrits plus haut.

Dans les exemples des figures 7 à 11, dans le sens aller, on a considéré une transmission point-à-point entre les modules terminaux sources et les fonctions distribuées, entre les fonctions distribuées et les modules terminaux destinataires, entre les fonctions distribuées et les fonctions destinataires; on pourrait aussi utiliser, en fonction du nombre de fonctions distribuées et de la taille des paramètres d'information une transmission point-à-multipoint, totale ou partielle. On pourrait donc, par rapport aux modes de réalisation proposé, procéder à une concaténation des messages ou d'une partie d'entre eux. Ceci s'applique aussi au sens retour.

## Revendications

1. Procédé de transferts mutuels de paramètres de commande entre des modules terminaux interconnectés par un réseau de communication transférant des données depuis des modules terminaux dits sources vers des modules terminaux dits destinataires, des paramètres de commande dits d'information étant transférés depuis des modules terminaux sources vers des modules terminaux destinataires à l'aide de messages d'information dédiés, chaque module terminal source transférant à plusieurs modules terminaux destinataires au moins un paramètre d'information relatif à chacun des modules terminaux destinataires,
**caractérisé en ce que** les transferts mutuels de messages d'information entre modules terminaux s'effectuent par l'intermédiaire de fonctions dites distribuées,
**en ce qu'**une fonction distribuée est affectée à un ensemble de modules terminaux destinataires et à un ensemble de modules terminaux sources;
et **en ce que** le procédé comprend les étapes de
- génération, par un module terminal source, d'au moins un message d'information dédié comprenant des paramètres d'information relatifs aux modules terminaux destinataires de chaque fonction distribuée associée qui est affectée au dit module terminal source;
- transmission de chaque message d'information depuis le dit module terminal source vers ladite fonction distribuée concernée;
- réception par chaque fonction distribuée de messages d'information provenant d'une pluralité de modules terminaux sources auxquels elle est affectée;
- traitement par chaque fonction distribuée des paramètres d'information des messages d'information reçus, ces paramètres étant relatifs aux modules terminaux sources et aux modules terminaux destinataires auxquels elle est affectée;
- génération et transmission par chaque fonction distribuée d'au moins un message d'information comprenant les résultats du traitement des dits paramètres d'information.

2. Procédé selon la revendication 1, **caractérisé en ce que** le traitement effectué par la fonction distribuée comprend la séparation des paramètres d'information, relatifs à une pluralité de modules terminaux destinataires, et provenant d'un même module terminal source, et le regroupement, dans au moins un nouveau message d'information, des paramètres d'information relatifs à un même module terminal destinataire et provenant de différents modules terminaux sources ; et **en ce qu'**il comprend en outre l'étape de réception, par chaque module destinataire, d'au moins un message d'information en provenance de chacune des fonctions distribuées auxquelles il est associé.

3. Procédé selon la revendication 1, **caractérisé en ce que** le traitement effectué par la fonction distribuée comprend l'agrégation des paramètres d'information relatifs à un même module terminal destinataire, et provenant d'une pluralité de modules terminaux sources, pour élaborer au moins un paramètre agrégé relatif à chaque module terminal destinataire.

4. Procédé selon la revendication 3, **caractérisé en ce que** l'étape de génération et transmission, par la fonction distribuée, comprend la transmission d'au moins un message d'information à chaque module terminal destinataire auquel il est associé; et **en ce qu'**il comprend en outre une étape de réception , par chaque module terminal destinataire, d'au moins un message d'information, transportant au moins un paramètre agrégé, en provenance de chacune des fonctions distribuées auxquelles il est associé.

5. Procédé selon la revendication 3, **caractérisé en ce que** les transferts mutuels de messages d'information entre modules terminaux s'effectuent en outre par l'intermédiaire de fonctions destinataires;
**en ce qu'**une fonction destinataire est affectée à un ensemble de modules terminaux destinataires, et à un ensemble de fonctions distribuées; **en ce que** chaque fonction destinataire se substitue au dit ensemble de modules terminaux destinataires en ce qui concerne les opérations de réception finale des messages d'information ;
**en ce que** l'étape de génération et transmission par la fonction distribuée comprend la transmission d'au moins un nouveau message d'information à au moins une fonction destinataire, et **en ce que** le procédé comprend en outre une étape de réception par chaque fonction destinataire de messages d'information, transportant au moins un paramètre agrégé, en provenance des fonctions distribuées auxquelles elle est affectée.

6. Procédé selon la revendication 2 , **caractérisé en ce qu'**il comprend également des transferts mutuels de paramètres de commande dits de réponse dans des messages de réponse dédiés, générés par chacun des modules terminaux destinataires et destinés aux modules terminaux sources, chaque terminal destinataire générant au moins un message de réponse comprenant au moins un paramètre de réponse; **en ce que** les transferts de message de réponse, générés par les modules terminaux destinataires vers les modules terminaux sources, s'effectuent également par l'intermédiaire des fonctions distribuées associées; et **en ce qu'**il comprend les étapes de
- génération et transmission, par le module terminal destinataire vers chacune des fonctions distribuées associées, d'au moins un message de réponse destiné à plusieurs modules terminaux sources;
- réception, par chacune des fonctions distribuées, de messages de réponse provenant d'une pluralité de modules terminaux destinataires auxquels elle est affectée;
- traitement, par la fonction distribuée, des messages de réponse provenant de différents modules terminaux destinataires;
- génération et transmission, par la fonction distribuée, vers les modules terminaux sources auxquels elle est affectée, d'au moins un nouveau message de réponse regroupant les paramètres de réponse;
- et réception, par chacun desdits modules terminaux sources, des paramètres de réponses relatifs à une pluralité de modules terminaux destinataires, dans les messages de réponse transmis par chaque fonction distribuée associée.

7. Procédé selon la revendication 6, **caractérisé en ce que** chaque message de réponse transmis par un module terminal destinataire comprend, pour chaque module terminal source, au moins un paramètre de réponse individuel par module terminal source; et **en ce que** l'étape de traitement effectué par la fonction distribuée consiste à séparer, dans chaque message de réponse reçu, les paramètres de réponse individuels destinés à une pluralité de modules terminaux sources, et à regrouper, dans au moins un même nouveau message de réponse, des paramètres de réponse individuels relatifs à un même module terminal source et provenant de différents modules terminaux destinataires.

8. Procédé selon la revendication 6, **caractérisé en ce que** chaque message de réponse transmis par un module terminal destinataire comprend au moins un paramètre de réponse commun identique pour tous les modules terminaux sources; et **en ce que** l'étape de traitement effectué par la fonction distribuée consiste à regrouper, dans au moins un même nouveau message de réponse, des paramètres de réponse communs provenant de différents modules terminaux destinataires.

9. Procédé selon la revendication 5, **caractérisé en ce qu'**il comprend également des transferts mutuels de paramètres de commande dits de réponse dans des messages de réponse dédiés, générés par chacune desdites fonctions destinataires et destinés aux modules terminaux sources; et **en ce qu'**une fonction destinataire se substitue également aux modules terminaux destinataires dudit ensemble pour effectuer en outre une étape d'élaboration, pour chacun des modules terminaux de cet ensemble, d'au moins un paramètre de réponse commun identique pour tous les modules terminaux sources, une étape de génération d'au moins un message de réponse commun comprenant au moins un paramètre de réponse commun relatif à chacun des modules terminaux destinataires de cet ensemble, et une étape de transmission de ces messages vers les modules terminaux sources.

10. Procédé selon la revendication 9, **caractérisé en ce qu'**une fonction destinataire transmet au moins un messages de réponse commun directement vers les modules terminaux sources ; et **en ce que** le procédé comprend en outre une étape de réception, par chacun desdits modules terminaux sources, des paramètres de réponse communs relatifs à une pluralité de modules terminaux destinataires, dans les messages de réponse transmis par chaque fonction destinataire.

11. Procédé selon la revendication 9, **caractérisé en ce que** les transferts de message de réponse depuis les fonctions destinataires vers les modules terminaux sources s'effectuent par l'intermédiaire de fonctions distribuées, une fonction destinataire transmettant au moins un message de réponse commun vers les fonctions destinataires auxquelles elle est affectée; et **en ce que** le procédé comprend en outre les étapes de
- réception, par chacune des fonctions distribuées associées, d'au moins un message de réponse commun provenant de la fonction destinataire à laquelle elle est affectée;
- traitement, par une fonction distribuée, consistant à redistribuer chaque message de réponse commun vers les modules terminaux sources;
- génération et transmission, par une fonction distribuée, vers les modules terminaux sources auxquels elle est affectée, de chaque message de réponse commun;
- et réception, par chacun desdits modules terminaux sources, des paramètres de réponse communs relatifs à une pluralité de modules terminaux destinataires, dans les messages de réponse transmis par chaque fonction distribuée associée.

12. Procédé selon la revendication 8, **caractérisé**, pour maintenir la cohérence des paramètres de réponse communs reçus par les modules terminaux sources par rapport aux paramètres d'informations qu'ils ont transmis, en se protégeant contre la perte possible de messages lors de leur transfert à travers le réseau de communication, en ce que ladite étape de traitement, par une fonction distribuée, des paramètres d'information, comprend également une opération de mise en mémoire, dans la fonction distribuée, d'un indicateur binaire par module terminal source précisant si elle a bien reçu un message d'information de ce module terminal source; en ce que ladite étape de réception des messages d'information dans un module terminal destinataire comprend également une opération de mise en mémoire, dans le module terminal destinataire d'un indicateur binaire par fonction distribuée précisant s'il a bien reçu un message d'information de cette fonction distribuée; en ce que ladite étape de génération d'un message de réponse dans un module terminal destinataire comprend également une opération d'incorporation, dans chaque message de réponse, d'un indicateur binaire par fonction distribuée concernée qui précise, sur la base des indicateurs localement mémorisés, si ce module terminal destinataire a bien reçu ou non un message d'information provenant de cette fonction distribuée; et en ce que ladite étape de traitement, par une fonction distribuée, des paramètres de réponse, comprend également une opération d'incorporation, dans chaque message de réponse destiné à un module terminal source, d'un indicateur binaire par module terminal destinataire qui précise si chaque paramètre de réponse correspondant à ce module terminal destinataire est validé, cette validation dépendant d'une part des indicateurs binaires reçus par la fonction distribuée dans les messages de réponse et d'autre part des indicateurs binaires mémorisés localement dans la fonction distribuée.

13. Procédé selon la revendication 11, **caractérisé**, pour maintenir la cohérence des paramètres de réponse communs reçus par les modules terminaux sources par rapport aux paramètres d'informations qu'ils ont transmis, en se protégeant contre la perte possible de messages lors de leur transfert à travers le réseau de communication, en ce que ladite étape de traitement, par une fonction distribuée, des paramètres d'information, comprend également une opération de mise en mémoire, dans la fonction distribuée, d'un indicateur binaire par module terminal source précisant si elle a bien reçu un message d'information de ce module terminal source; en ce que ladite étape de réception des messages d'information dans une fonction destinataire comprend également une opération de mise en mémoire, dans la fonction destinataire, d'un indicateur binaire par fonction distribuée précisant si elle a bien reçu un message d'information de cette fonction distribuée; en ce que ladite étape de génération d'un message de réponse dans une fonction destinataire comprend également une opération d'incorporation, dans chaque message de réponse, d'un indicateur binaire par fonction distribuée concernée qui précise, sur la base des indicateurs localement mémorisés, si cette fonction destinataire a bien reçu ou non un message d'information provenant de cette fonction distribuée; et en ce que ladite étape de traitement, par une fonction distribuée, des paramètres de réponse, comprend également une opération d'incorporation, dans chaque message de réponse destiné à un module terminal source, d'un indicateur binaire par module terminal destinataire qui précise si chaque paramètre de réponse correspondant à ce module terminal destinataire est validé, cette validation dépendant d'une part des indicateurs binaires reçus par la fonction distribuée dans les messages de réponse et d'autre part des indicateurs binaires mémorisés localement dans la fonction distribuée.

14. Procédé selon la revendication 8, **caractérisé en ce que** les messages de réponse, qui transportent des paramètres communs identiques pour tous les modules terminaux sources, sont des messages identiques, et **en ce que** leur transfert est de type point-à-multipoint lorsqu'ils sont transmis vers plusieurs destinations.

15. Procédé selon l'une des revendications 7, **caractérisé en ce que** chaque module terminal source transmet dans un message d'information des paramètres d'information, relatifs à chacun des modules terminaux destinataires, chaque paramètre d'information caractérisant le volume de trafic de données qu'un module terminal source désire transmettre à un module terminal destinataire; et **en ce que** chaque module terminal destinataire, ou chaque fonction destinataire qui se substitue à ce dernier, transmet dans un message de réponse des paramètres de réponse relatifs à chacun des modules terminaux destinataires, chaque paramètre de réponse permettant à chaque terminal source de déterminer le volume de trafic de données qu'il est autorisé à transmettre à un module terminal destinataire.

16. Procédé selon l'une quelconque des revendications précédentes, **caractérisé en ce que** lesdites fonctions distribuées sont réalisées à l'aide de moyens additionnels introduits dans au moins certains des modules terminaux qui agissent alors également comme fonction distribuée, et **en ce que** chaque module terminal qui génère des messages de commande vers au moins une fonction distribuée, connaît en outre l'identité de chaque module terminal qui assume le rôle de chaque fonction distribuée donnée, permettant ainsi d'adresser ces messages aux fonctions distribuées appropriées.

17. Procédé selon l'une quelconque des revendications précédentes, **caractérisé en ce que** lesdites fonctions destinataires sont réalisées à l'aide de moyens additionnels introduits dans au moins certains des modules terminaux qui agissent alors également comme fonction destinataire ; et **en ce que** chaque fonction distribuée qui génère des messages de commande vers au moins une fonction destinataire, connaît en outre l'identité de chaque module terminal qui assume le rôle de chaque fonction destinataire, permettant ainsi d'adresser ces messages aux fonctions destinataires appropriées.

## Claims

1. A method of mutually transferring control parameters between terminal modules interconnected by a communications network transferring data from "source" terminal modules to "destination" terminal modules, "information" control parameters being transferred from the source terminal modules to the destination terminal modules by means of dedicated information messages, each source terminal module transferring to a plurality of destination terminal modules at least one information parameter relating to each of the destination terminal modules;
the method being **characterized in that** the mutual transfers of information messages between terminal modules take place by means of "distributed" functions, **in that** a distributed function is allocated to a set of destination terminal modules and to a set of source terminal modules, and **in that** the method comprises the steps of:
- a source terminal module generating at least one dedicated information message comprising information parameters relating to the destination terminal modules of each associated distributed function which is allocated to said source terminal module;
- transmitting each information message from the said source terminal module to said corresponding distributed function;
- each distributed function receiving information messages coming from a plurality of source terminal modules to which it is allocated;
- each distributed function processing the information parameters of the received information messages, said parameters relating to the source terminal modules and to the destination terminal modules to which the function is allocated; and
- each distributed function generating and transmitting at least one information message comprising the results of the processing of said information parameters.

2. A method according to claim 1, **characterized in that** the processing performed by the distributed function comprises separating the information parameters relating to a plurality of destination terminal modules and coming from a single source terminal module, and regrouping information parameters relating to a single destination terminal module and coming from different source terminal modules in at least one new information message, and **in that** it further comprises the step of each destination module receiving at least one information message from each of the distributed functions with which it is associated.

3. A method according to claim 1, **characterized in that** the processing performed by the distributed function comprises aggregating information parameters relating to a single destination terminal module and coming from a plurality of source terminal modules, so as to generate at least one aggregated parameter relating to each destination terminal module.

4. A method according to claim 3, **characterized in that** the generating and transmitting step performed by the distributed function comprises transmitting at least one information message to each destination terminal module with which it is associated, and **in that** it further comprises a step of each destination terminal module receiving at least one information message transporting at least one aggregated parameter coming from each of the distributed functions with which it is associated.

5. A method according to claim 3, **characterized in that** the mutual transfers of information messages between terminal modules further takes place via destination functions; **in that** a destination function is allocated to a set of destination terminal modules and to a set of distributed functions; **in that** each destination function takes the place of said set of destination terminal modules for the purpose of performing the final reception operations on information messages; **in that** the generating and transmission step performed by the distributed functions comprises transmitting at least one new information message to at least one destination function, and **in that** the method further comprises a step of each destination function receiving information messages transporting at least one aggregated parameter coming from the distributed functions to which it is allocated.

6. A method according to claim 2, **characterized in that** it also comprises mutual transfers of "response" control parameters in dedicated response messages generated by each of the destination terminal modules and sent to the source terminal modules, each destination terminal generating at least one response message comprising at least one response parameter; **in that** the response message transfers generated by the destination terminal modules to the source terminal modules also take place via associated distributed functions; and **in that** the method comprises the steps of:
- the destination terminal module generating and transmitting to each of the associated distributed functions at least one response message to be sent to a plurality of source terminal modules;
- each distributed function receiving response messages coming from a plurality of destination terminal modules to which it is allocated;
- the distributed function processing response messages coming from different destination terminal modules;
- the distributed function generating and transmitting to the source terminal modules to which it is allocated at least one new response message regrouping the response parameters; and
- each of said source terminal modules receiving response parameters relating to a plurality of destination terminal modules in the response messages transmitted by each associated distributed function.

7. A method according to claim 6, **characterized in that** each response message transmitted by a destination terminal module comprises, for each source terminal module, at least one individual response parameter per source terminal module; and **in that** the processing step evaluated by the distributed function consists in separating the individual response parameters for a plurality of source terminal modules in each received response message and in regrouping individual response parameters relating to a single source terminal module and coming from different destination terminal modules in at least one new response message.

8. A method according to claim 6, **characterized in that** each response message transmitted by a destination terminal module comprises at least one common response parameter that is identical for all of the source terminal modules; and **in that** the processing step performed by the distributed function consists in regrouping common response parameters coming from different destination terminal modules in at least one new response message.

9. A method according to claim 5, **characterized in that** it also comprises mutual transfers of "response" control parameters in dedicated response messages each generated by said destination functions for sending to the source terminal modules; and **in that** a destination function also takes the place of the destination terminal modules of said set for further performing a step of generating at least one common response parameter that is identical for all of the source terminal modules for each of the terminal modules of said set, a step of generating at least one common response message comprising at least one common response parameter relating to each of the destination terminal modules of said set, and a step of transmitting said messages to the source terminal modules.

10. A method according to claim 9, **characterized in that** a destination function transmits at least one common response message directly to the source terminal modules, and **in that** the method further comprises a step in which each of said source terminal modules receives common response parameters relating to a plurality of destination terminal modules in the response messages transmitted by each destination function.

11. A method according to claim 9, **characterized in that** the transfers of response messages from the destination functions to the source terminal modules take place via distributed functions, a destination function transmitting at least one common response message to the destination functions to which it is allocated; and **in that** the method further comprises the steps of:
- each of said associated distributed functions receiving at least one common response message coming from the destination function to which it is allocated;
- a distributed function performing processing consisting in redistributing each common response message to the source terminal modules;
- a distributed function generating and transmitting each common response message to the source terminal modules to which it is allocated; and
- each of said source terminal modules receiving common response parameters relating to a plurality of destination terminal modules in the response messages transmitted by each associated distributed function.

12. A method according to claim 8, in which in order to maintain coherence between the common response parameters received by the source terminal modules relative to the information parameters they have transmitted, while providing protection against the possibility of messages being lost while they are being transferred through the communications network, the method is **characterized in that** said step of processing the information parameters by means of a distributed function also comprises an operation of storing in the distributed function a binary flag per source terminal module specifying whether the function has properly received an information message from said source terminal module; **in that** said step of receiving information messages in a destination terminal module also comprises an operation of storing in the destination terminal module a binary flag per distributed function specifying whether an information message has been properly received from said distributed function; **in that** said step of generating a response message in a destination terminal module also comprises an operation of incorporating in each response message a binary flag per distributed function involved specifying, on the basis of the locally stored flags, whether or not said destination terminal module has properly received an information message coming from said distributed function; and **in that** said step of a distributed function processing response parameters further comprises an operation of incorporating in each response message sent to a source terminal module, a binary flag per destination terminal module specifying whether or not each response parameter corresponding to said destination terminal module is valid, validation depending firstly on the binary flags received by the distributed function in the response messages, and also on the binary flags stored locally in the distributed function.

13. A method according to claim 11, in which in order to maintain coherence between the common response parameters received by the source terminal modules relative to the information parameters they have transmitted, while providing protection against the possibility of messages being lost while they are being transferred through the communications network, the method is **characterized in that** said step of processing information parameters in a distributed function also comprises an operation of storing in the distributed function a binary flag per source terminal module specifying whether it has properly received an information message from said source terminal module; **in that** said step of receiving information messages in a destination function also comprises an operation of storing in the destination function a binary flag per distributed function specifying whether it has properly received an information message from said distributed function; **in that** said step of generating a response message in a destination function also comprises an operation of incorporating in each response message a binary flag per distributed function concerned specifying, on the basis of locally stored flags, whether or not said destination function has properly received an information message coming from said distributed function; and **in that** said step of processing response parameters by a distributed function also comprises an operation of incorporating in each response message for sending to a source terminal module a binary flag per destination terminal module specifying whether each response parameter corresponding to said destination terminal module is valid, validation depending firstly on the binary flags received by the distributed function in the response messages and secondly on the binary flags stored locally in the distributed function.

14. A method according to claim 8, **characterized in that** the response messages transporting identical common parameters for all of the source terminal modules are identical messages, and **in that** they are transferred on a point-to-multipoint basis when they are transited to a plurality of destinations.

15. A method according to claim 7, **characterized in that** each source terminal module transmits information parameters in an information message, the parameters relating to each of the destination terminal modules, each information parameter characterizing the volume of data traffic that a source terminal module seeks to transmit to a destination terminal module; and **in that** each destination terminal module, or each destination function taking the place thereof, transmits in a response message response parameters relating to each of the destination terminal modules, each response parameter enabling each source terminal to determine the volume of data traffic which it is authorized to transmit to a destination terminal module.

16. A method according to any preceding claim, **characterized in that** said distributed functions are implemented using additional means introduced in at least some of the terminal modules which then also act as respective distributed functions, and **in that** each terminal module which generates control messages for at least one distributed function also knows the identity of each terminal module taking on the role of each given distributed function, thus enabling said messages to be addressed to the appropriate distributed functions.

17. A method according to any preceding claim, **characterized in that** said destination functions are implemented using additional means introduced in at least some of the terminal modules which then also act as respective destination functions; and **in that** each distributed function which generates control messages for at least one destination function also knows the identity of each terminal module taking on the role of each destination function, thus enabling said messages to be addressed to the appropriate destination functions.

## Patentansprüche

1. Verfahren zur wechselseitigen Übertragung von Steuerungsparametern zwischen miteinander verbundenen Endmodulen über ein Kommunikationsnetz, in dem Daten von den so genannten Quellen-Endmodulen an so genannte Empfänger-Endmodule übertragen werden, wobei die so genannten Informations-Steuerungsparameter mit Hilfe dedizierter Informationsmeldungen von den Quellen-Endmodulen an die Empfänger-Endmodule übertragen werden, wobei jedes Quellen-Endmodul mindestens einen Informationsparameter in Bezug auf jedes der Empfänger-Endmodule an mehrere Empfänger-Endmodule überträgt,
**dadurch gekennzeichnet, dass** die wechselseitige Übertragung von Informationsmeldungen zwischen den Endmodulen mit Hilfe von so genannten verteilten Zwischenfunktionen erfolgt,
dass eine verteilte Funktion einer Einheit an Empfänger-Endmodulen und einer Einheit an Quellen-Endmodulen zugeordnet ist,
und dass das Verfahren die folgenden Schritte umfasst:
- Erzeugung mindestens einer dedizierten Informationsmeldung durch das Quellen-Endmodul, die Informationsparameter in Bezug auf die Empfänger-Endmodule jeder verteilten Funktion umfasst, die dem genannten Quellen-Endmodul zugeordnet ist;
- Übertragung jeder Informationsmeldung von dem genannten Quellen-Endmodul an die genannte, betreffende verteilte Funktion;
- Empfang der Informationsmeldungen von einer Vielzahl an Quellen-Endmodulen, denen sie zugeordnet ist, durch jede verteilte Funktion;
- Verarbeitung der Informationsparameter der empfangenen Informationsmeldungen durch jede verteilte Funktion, wobei sich diese Parameter auf die Quellen-Endmodule und auf die Empfänger-Endmodule beziehen, denen sie zugeordnet ist;
- Erzeugung und Übertragung mindestens einer Informationsmeldung, die die Ergebnisse der Verarbeitung der genannten Informationsparameter umfasst, durch jede verteilte Funktion.

2. Verfahren gemäß Anspruch 1, **dadurch gekennzeichnet, dass** die von der verteilten Funktion durchgeführte Verarbeitung die Abtrennung der Informationsparameter in Bezug auf eine Vielzahl von Empfänger-Endmodulen, die vom gleichen Quellen-Endmodul stammen, und die Zusammenfassung der Informationsparameter in Bezug auf das gleiche Empfänger-Endmodul, die von verschiedenen Quellen-Endmodulen stammen, in mindestens einer neuen Informationsmeldung umfasst, sowie dadurch, dass es außerdem einen Schritt zum Empfang mindestens einer Informationsmeldung von jeder der verteilten Funktionen, denen es zugeordnet ist, durch jedes Empfängermodul umfasst.

3. Verfahren gemäß Anspruch 1, **dadurch gekennzeichnet, dass** die von der verteilten Funktion durchgeführte Verarbeitung die Zusammenfassung der Informationsparameter in Bezug auf das gleiche Empfänger-Endmodul, die von einer Vielzahl von Quellen-Endmodulen stammen, umfasst, um mindestens einen zusammengefassten Parameter in Bezug auf jedes Empfänger-Endmodul zu erstellen.

4. Verfahren gemäß Anspruch 3, **dadurch gekennzeichnet, dass** der Schritt zur Erzeugung und Übertragung durch die verteilte Funktion die Übertragung mindestens einer Informationsmeldung an jedes Empfänger-Endmodul, dem sie zugeordnet ist, umfasst, sowie dadurch, dass es außerdem einen Schritt zum Empfang mindestens einer Informationsmeldung durch jedes Empfänger-Endmodul umfasst, in der mindestens ein zusammengefasster Parameter übertragen wird, der von jeder der verteilten Funktionen stammt, denen es zugeordnet ist.

5. Verfahren gemäß Anspruch 3, **dadurch gekennzeichnet, dass** die wechselseitige Übertragung von Informationsmeldungen zwischen den Endmodulen außerdem mit Hilfe von Empfängerfunktionen erfolgt;
dass eine Empfängerfunktion einer Einheit von Empfänger-Endmodulen und einer Einheit von verteilten Funktionen zugeordnet ist;
dass jede Empfängerfunktion die genannte Einheit an Empfänger-Endmodulen in Bezug auf die Vorgänge zum endgültigen Empfang von Informationsmeldungen ersetzt;
dass der Schritt zur Erzeugung und Übertragung durch die verteilte Funktion die Übertragung von mindestens einer neuen Informationsmeldung an mindestens eine Empfängerfunktion umfasst, sowie dadurch, dass das Verfahren außerdem einen Schritt zum Empfang von Informationsmeldungen durch jede Empfängerfunktion umfasst, in der mindestens ein zusammengefasster Parameter von den verteilten Funktionen, denen sie zugeordnet ist, übertragen wird.

6. Verfahren gemäß Anspruch 2, **dadurch gekennzeichnet, dass** es außerdem die wechselseitige Übertragung von so genannten Antwort-Steuerungsparametern in den dedizierten Antwortmeldungen umfasst. die von jedem der Empfänger-Endmodule erzeugt werden und für die Quellen-Endmodule bestimmt sind, wobei jedes Empfänger-Endmodul mindestens eine Antwortmeldung erzeugt, die mindestens einen Antwortparameter umfasst; dass die Übertragung von Antwortmeldungen, die von den Empfänger-Endmodulen für die Quellen-Endmodule erzeugt werden, auch mit Hilfe der zugeordneten verteilten Funktionen erfolgt, sowie dadurch, dass es die folgenden Schritte umfasst:
- Erzeugung und Übertragung mindestens einer Antwortmeldung, die für mehrere Quellen-Endmodule bestimmt ist, vom Empfänger-Endmodul an jede der ihm zugeordneten verteilten Funktionen;
- Empfang der Antwortmeldungen, die von einer Vielzahl an Empfänger-Endmodulen stammen, denen sie zugeordnet ist, durch jede der verteilten Funktionen;
- Verarbeitung der Antwortmeldungen, die von den verschiedenen Empfänger-Endmodulen stammen, durch die verteilte Funktion;
- Erzeugung und Übertragung mindestens einer neuen Antwortmeldung, in der die Antwortparameter zusammengefasst sind, von der verteilten Funktion an die ihr zugeordneten Quellen-Endmodule;
- und Empfang der Antwortparameter in Bezug auf eine Vielzahl von Empfänger-Endmodulen in den Antwortmeldungen, die von jeder zugeordneten, verteilten Funktion übertragen werden, durch jedes der genannten Quellen-Endmodule.

7. Verfahren gemäß Anspruch 6, **dadurch gekennzeichnet, dass** jede von einem Empfänger-Endmodul übertragene Antwortmeldung für jedes Quellen-Endmodul mindestens einen speziellen Antwortparameter pro Quellen-Endmodul umfasst; und dadurch dass der von der verteilten Funktion ausgeführte Verarbeitungsschritt darin besteht, in jeder empfangenen Antwortmeldung die speziellen Antwortparameter, die für eine Vielzahl von Quellen-Endmodulen bestimmt sind, abzutrennen und die speziellen Antwortparameter in Bezug auf ein Quellen-Endmodul, die von verschiedenen Empfänger-Endmodulen stammen, in mindestens einer neuen Antwortmeldung zusammenzufassen.

8. Verfahren gemäß Anspruch 6, **dadurch gekennzeichnet, dass** jede von einem Empfänger-Endmodul übertragene Antwortmeldung mindestens einen gemeinsamen Antwortparameter umfasst, der für alle Quellen-Endmodule gleich ist, sowie dadurch, dass der von der verteilten Funktion ausgeführte Verarbeitungsschritt darin besteht, die gemeinsamen Antwortparameter, die von verschiedenen Empfänger-Endmodulen stammen, in mindestens einer neuen Antwortmeldung zusammenzufassen.

9. Verfahren gemäß Anspruch 5, **dadurch gekennzeichnet, dass** es außerdem die wechselseitige Übertragung von so genannten Antwort-Steuerungsparametern in den dedizierten Antwortmeldungen umfasst, die von jeder der genannten Empfängerfunktionen erzeugt werden und für die Quellen-Endmodule bestimmt sind, sowie dadurch, dass eine Empfängerfunktion außerdem die Empfänger-Endmodule der genannten Einheit ersetzt, um außerdem einen Schritt zur Erstellung mindestens eines gemeinsamen, identischen Antwortparameters für alle Quellen-Endmodule für jedes der Endmodule dieser Einheit, einen Schritt zur Erzeugung mindestens einer gemeinsamen Antwortmeldung, die mindestens einen gemeinsamen Antwortparameter in Bezug auf jedes der Empfänger-Endmodule dieser Einheit umfasst, sowie einen Schritt zur Übertragung dieser Meldungen an die Quellen-Endmodule auszuführen.

10. Verfahren gemäß Anspruch 9, **dadurch gekennzeichnet, dass** eine Empfängerfunktion mindestens eine gemeinsame Antwortmeldung direkt an die Quellen-Endmodule überträgt, sowie dadurch, dass das Verfahren außerdem einen Schritt zum Empfang der gemeinsamen Antwortparameter in Bezug auf eine Vielzahl von Empfänger-Endmodulen in den Antwortmeldungen, die von jeder Empfängerfunktion übertragen werden, durch jedes der genannten Quellen-Endmodule umfasst.

11. Verfahren gemäß Anspruch 9, **dadurch gekennzeichnet, dass** die Übertragung von Antwortmeldungen von den Empfängerfunktionen an die Quellen-Endmodule mit Hilfe von verteilten Funktionen erfolgt, wobei eine Empfängerfunktion mindestens eine gemeinsame Antwortmeldung an die Empfängerfunktionen überträgt, denen sie zugeordnet ist, sowie dadurch, dass das Verfahren außerdem die folgenden Schritte umfasst:
- Empfang mindestens einer gemeinsamen Antwortmeldung, die von der ihr zugeordneten Empfängerfunktion stammt, durch jede der zugeordneten verteilten Funktionen;
- Verarbeitung durch eine verteilte Funktion, die darin besteht, jede gemeinsame Antwortmeldung an die Quellen-Endmodule zurückzusenden;
- Erzeugung und Übertragung jeder gemeinsamen Antwortmeldung durch eine verteilte Funktion an die ihr zugeordneten Quellen-Endmodule;
- und Empfang der gemeinsamen Antwortparameter in Bezug auf eine Vielzahl von Empfänger-Endmodulen in den Antwortparametern, die von jeder zugeordneten verteilten Funktion übertragen werden, durch jedes der genannten Quellen-Endmodule.

12. Verfahren gemäß Anspruch 8, **dadurch gekennzeichnet, dass** der genannte Verarbeitungsschritt der Informationsparameter durch eine verteilte Funktion, um die Kohärenz zwischen den gemeinsamen Antwortparametern, die von den Quellen-Endmodulen empfangen werden, und den von ihnen übertragenen Informationsparametern aufrecht zu erhalten, wobei man sich von einem möglichen Verlust von Meldungen bei der Übertragung über das Kommunikationsnetz schützt, auch einen Vorgang zur Speicherung eines binären Kennzeichens für jedes Quellen-Endmodul in der verteilten Funktion umfasst, in dem angegeben ist, ob eine Informationsmeldung dieses Quellen-Endmoduls korrekt empfangen wurde, sowie dadurch, dass der genannte Schritt zum Empfang von Informationsmeldungen in einem Empfänger-Endmodul außerdem einen Schritt zur Speicherung eines binären Kennzeichens für jede verteilte Funktion in dem Empfänger-Endmodul umfasst, in dem angegeben ist, ob eine Informationsmeldung dieser verteilten Funktion korrekt empfangen wurde, sowie dadurch, dass der genannte Schritt zur Erzeugung einer Antwortmeldung in einem Empfänger-Endmodul außerdem einen Vorgang zum Einfügen eines binären Kennzeichens für jede betreffende verteilte Funktion in jede Antwortmeldung umfasst, in der auf der Basis der lokal gespeicherten Kennzeichen angegeben ist, ob dieses Empfänger-Endmodul eine Informationsmeldung von dieser verteilten Funktion korrekt empfangen hat oder nicht, sowie dadurch, dass der genannte Verarbeitungsschritt durch eine verteilte Funktion außerdem einen Schritt zum Einfügen eines binären Kennzeichens für jedes Empfänger-Endmodul in jede Antwortmeldung an ein Quellen-Endmodul umfasst, in der angegeben ist, ob jeder Antwortparameter, der diesem Empfänger-Endmodul entspricht freigegeben ist, wobei diese Freigabe einerseits von den durch die verteilte Funktion in den Antwortmeldungen empfangenen binären Kennzeichen und andererseits von den lokal in der verteilten Funktion gespeicherten binären Kennzeichen abhängig ist.

13. Verfahren gemäß Anspruch 11, **dadurch gekennzeichnet, dass** der genannte Verarbeitungsschritt durch eine verteilte Funktion, um die Kohärenz zwischen den von den Quellen-Endmodulen empfangenen gemeinsamen Antwortparametern und den von ihnen übertragenen Antwortparametern aufrecht zu erhalten, wobei man sich vor einem möglichen Verlust von Meldungen bei ihrer Übertragung über das Kommunikationsnetz schützt, außerdem einen Schritt zur Speicherung eines binären Kennzeichens für jedes Quellen-Endmodul in der verteilten Funktion umfasst, in dem angegeben ist, ob sie eine Informationsmeldung von diesem Quellen-Endmodul korrekt empfangen hat, sowie dadurch, dass der genannte Schritt zum Empfang von Informationsmeldungen in einer Empfängerfunktion außerdem einen Vorgang zur Speicherung eines binären Kennzeichens für jede verteilte Funktion in der Empfängerfunktion umfasst, in dem angegeben ist, ob sie eine Informationsmeldung von dieser verteilten Funktion korrekt empfangen hat, sowie dadurch, dass der genannte Schritt zur Erzeugung einer Antwortmeldung in einer Empfängerfunktion außerdem einen Vorgang zum Einfügen eines binären Kennzeichens für jede betroffene verteilte Funktion in jede Antwortmeldung umfasst, in der auf der Basis der lokal gespeicherten Kennzeichen angegeben ist, ob diese Empfängerfunktion eine Informationsmeldung von dieser verteilten Funktion korrekt empfangen hat oder nicht, sowie dadurch, dass der genannte Verarbeitungsschritt der Antwortparameter durch eine verteilte Funktion außerdem einen Schritt zu Einfügen eines binären Kennzeichens für jedes Empfänger-Endmodul in jede Antwortmeldung an eine Quellen-Endmodul umfasst, in der angegeben ist, ob jeder Antwortparameter für dieses Empfänger-Endmodul freigegeben ist, wobei diese Freigabe einerseits von den von der verteilten Funktion in den Antwortmeldungen empfangenen binären Kennzeichen und andererseits von den lokal in der verteilten Funktion gespeicherten binären Kennzeichen abhängig ist.

14. Verfahren gemäß Anspruch 8, **dadurch gekennzeichnet, dass** die Antwortmeldungen, die die gemeinsamen, für alle Quellen-Endmodule identischen Parameter übertragen, identisch sind, sowie dadurch, dass ihre Übertragung in einem Punkt-zu-Mehrpunkt-Modus an mehrere Empfänger erfolgt.

15. Verfahren gemäß Anspruch 7, **dadurch gekennzeichnet, dass** jedes Quellen-Endmodul in einer Informationsmeldung Informationsparameter in Bezug auf jedes der Empfänger-Endmodule überträgt, wobei jeder Informationsparameter das Datenverkehrsvolumen, das ein Quellen-Endmodul an ein Empfänger-Endmodul übertragen will, kennzeichnet, sowie dadurch, dass jedes Empfänger-Endmodul oder jede Empfängerfunktion, die dieses ersetzt, in einer Antwortmeldung Antwortparameter in Bezug auf jedes der Empfänger-Endmodule überträgt, wobei jeder Antwortparameter jedem Quellen-Endmodul ermöglicht, das Datenverkehrsvolumen zu ermitteln, das es an ein Empfänger-Endmodul übertragen darf.

16. Verfahren gemäß einem beliebigen der vorgenannten Ansprüche, **dadurch gekennzeichnet, dass** die genannten verteilten Funktionen mit Hilfe von zusätzlichen Mitteln ausgeführt werden, die zumindest in einige Endmodule integriert werden, die dann ebenfalls als verteilte Funktion fungieren, sowie dadurch, dass jedes Endmodul, das Steuerungsmeldungen für mindestens eine verteilte Funktion erzeugt, außerdem die Identität jedes Endmoduls kennt, das die Rolle jeder bestimmten verteilten Funktion übernimmt, und auf diese Weise die Möglichkeit bietet, diese Meldungen an die entsprechenden verteilten Funktionen zu adressieren.

17. Verfahren gemäß einem beliebigen der vorgenannten Ansprüche, **dadurch gekennzeichnet, dass** die genannten Empfängerfunktionen mit Hilfe von zusätzlichen Mitteln ausgeführt werden, die zumindest in einige Endmodule integriert werden, die dann ebenfalls als Empfängerfunktion fungieren, sowie dadurch, dass jede verteilte Funktion, die Steuerungsmeldungen für mindestens eine EmpfängerFunktion erzeugt, außerdem die Identität jedes Endmoduls kennt, das die Rolle jeder Empfängerfunktion übernimmt, und auf diese Weise die Möglichkeit bietet, diese Meldungen an die entsprechenden Empfängerfunktionen zu adressieren.
